# EUROPÄISCHE PATENTSCHRIFT

(11) **EP 3 532 292 B1**
(45) Veröffentlichungstag und Bekanntmachung des Hinweises auf die Patenterteilung: **14.10.2020**
(21) Anmeldenummer: 17784661.5
(22) Anmeldetag: 24.10.2017
(51) Int. Cl.: B32B 27/34, B29C 55/12, C08J 5/18, B29C 55/18, B29C 55/28, B32B 27/08, B32B 27/32

(54) **SCHRUMPFFILME MIT PA 6/6.6**
SHRINK FILMS WITH PA 6/6.6
FILMS RÉTRACTABLES AVEC PA 6/6.6

(30) Priorität: 28.10.2016 EP 16196407
(43) Veröffentlichungstag der Anmeldung: 04.09.2019
(73) Patentinhaber: BASF SE, 67056 Ludwigshafen am Rhein (DE)
(72) Erfinder: MINKWITZ, Rolf, 67056 Ludwigshafen (DE); BIEDASEK, Silke, 67056 Ludwigshafen (DE); KNIERIM, Rony, 67056 Ludwigshafen (DE); HERBOTH, Frank, 67056 Ludwigshafen (DE)
(74) Vertreter: BASF IP Association
(86) Internationale Anmeldenummer: PCT/EP2017/077129
(87) Internationale Veröffentlichungsnummer: WO 2018/077856

(56) Entgegenhaltungen:
- WO-A1-2015/181333
- US-A1- 2002 034 622
- US-A1- 2003 012 900
- US-A1- 2009 029 079
- US-A1- 2011 245 435
- US-B1- 6 699 549

## Beschreibung

Die vorliegende Erfindung betrifft ein Verfahren zur Herstellung eines Polymerfilms (P), der eine Polyamidzusammensetzung (PZ) enthält, durch Extrusion der Polyamidzusammensetzung (PZ) durch eine Ringdüse und anschließendes Verstrecken des so erhaltenen Schlauchs durch Einblasen von Luft. Darüber hinaus betrifft die vorliegende Erfindung den Polymerfilm (P) erhältlich nach dem erfindungsgemäßen Verfahren sowie ein Verfahren zum Verpacken von Lebensmitteln mit dem Polymerfilm (P).

Polyamide sind industriell von besonderer Bedeutung, da sie sich durch sehr gute mechanische Eigenschaften auszeichnen, insbesondere besitzen sie eine hohe Festigkeit und Zähigkeit, eine gute Chemikalienbeständigkeit sowie eine hohe Abriebfestigkeit. Sie werden beispielsweise zur Herstellung von Angelschnüren, Kletterseilen und Teppichböden verwendet. Darüber hinaus finden Polyamide Anwendung zur Herstellung von Verpackungsfilmen und Verpackungshüllen. Eine Übersicht über die Verwendung als Verpackungsfilme und Verpackungshüllen sowie Verfahren zu deren Herstellung ist beispielsweise in Encyclopedia of Polymer Science and Engineering, 2nd edition, vol. 7, pp. 73-127; vol. 10, pp. 684-695 (John Wiley & Sons 1987) beschrieben. Die darin beschriebenen Polyamidfilme sind jedoch sehr steif und haben eine niedrige Weiterreißfestigkeit.

Für Verpackungsfilme und Verpackungshüllen werden daher häufig Copolyamide, die positive Eigenschaften von verschiedenen Polyamiden in sich vereinen, eingesetzt. Im Stand der Technik sind verschiedene Copolyamide beschrieben.

Die US 6 699 549 B beschreibt ein Verfahren zur Herstellung schrumpfbarer Mehrschichtfilme, die eine Polyamidzusammensetzung enthalten.

Die WO 2004/103079 beschreibt räucherbare flächen- und schlauchförmige Nahrungsmittelhüllen oder -folien für Lebensmittelverpackungen. Diese Folien werden im Düsenblasverfahren aus einer homogenen Kunststoffschmelze einer Kunststoffmischung, die zumindest Polyamid mit Polyvinylalkohol und Polyetherblockcopolyamid enthält, hergestellt. Die Kunststoffmischung weist einen Anteil an Polyamid von 40 bis 80 Gew.-% auf. Die Dicke der Nahrungsmittelhülle oder -folie liegt im Bereich von 10 bis 50 µm. Als Polyamid ist unter anderem Polyamid 6/6.6 offenbart.

Die WO 2008/040404 beschreibt mehrschichtige, im Düsenblasverfahren hergestellte und im Triple-Bubble-Verfahren biaxial verstreckte flächen- oder schlauchförmige Nahrungsmittelhüllen und -folien. Diese enthalten wenigstens sieben Schichten. Eine der Schichten kann Polyamide wie Polycaprolactam (Polyamid 6), Polyamid 6.6, Polyamid 6/6.6, Polyamid 11, Polyamid 12 oder Mischungen daraus enthalten.

Die WO 2008/017453 betrifft ebenfalls mehrschichtige, im Düsenblasverfahren hergestellte und im Triple-Bubble-Verfahren biaxial verstreckte flächen- oder schlauchförmige Nahrungsmittelhüllen oder -folien. Diese Nahrungsmittelhüllen oder -folien umfassen wenigstens neun Schichten, wobei eine Schicht ein Polyamid enthält. Geeignete Polyamide sind beispielsweise Polyamid 6, Polyamid 6/6, Polyamid 6/6.6 sowie Polyamid 6/12.

Nachteilig bei den in der WO 2004/103079, der WO 2008/040404 und der WO 2008/017453 beschriebenen Polymerfilmen ist, dass die Polymerfilme häufig nur schlecht verstreckt werden können und/oder nur ein unzureichendes Schrumpfverhalten aufweisen, da sie nur geringfügig schrumpfen.

Der vorliegenden Erfindung liegt daher die Aufgabe zugrunde, ein Verfahren zur Herstellung eines Polymerfilms (P) bereitzustellen, das die Nachteile der im Stand der Technik beschriebenen Verfahren nicht oder nur in sehr vermindertem Maße aufweist. Das Verfahren sollte zudem möglichst einfach und kostengünstig durchführbar sein.

Gelöst wird diese Aufgabe durch ein Verfahren zur Herstellung eines Polymerfilms (P), der eine Polyamidzusammensetzung (PZ) enthält, wobei die Polyamidzusammensetzung (PZ) Polyamid 6/6.6 und Polyamid-Oligomere umfasst und wobei aus der Polyamidzusammensetzung (PZ) gemäß ISO 6427 : 2013 im Bereich von 5 bis 25 Gew.-%, bezogen auf das Gesamtgewicht der Polyamidzusammensetzung (PZ), Polyamid-Oligomere extrahiert werden können, umfassend die Schritte
i) Bereitstellen der Polyamidzusammensetzung (PZ) in geschmolzener Form in einem ersten Extruder,
ii) Extrusion der in Schritt i) bereitgestellten Polyamidzusammensetzung (PZ) in geschmolzener Form aus dem ersten Extruder durch eine Ringdüse unter Erhalt eines Schlauchs, der die Polyamidzusammensetzung (PZ) in geschmolzener Form enthält,
iii) Abkühlen des in Schritt ii) erhaltenen Schlauchs, der die Polyamidzusammensetzung (PZ) in geschmolzener Form enthält, in einem Wasserbad auf eine erste Temperatur (T₁), wobei die Polyamidzusammensetzung (PZ) erstarrt unter Erhalt eines ersten Schlauchfilms, der die Polyamidzusammensetzung (PZ) enthält,
iv) Erwärmen des in Schritt iii) erhaltenen ersten Schlauchfilms auf eine zweite Temperatur (T₂) unter Erhalt eines erwärmten ersten Schlauchfilms, der die Polyamidzusammensetzung (PZ) enthält,
v) Einblasen von Luft in den in Schritt iv) erhaltenen erwärmten ersten Schlauchfilm, wobei der erwärmte erste Schlauchfilm in seiner Breite verstreckt wird, und wobei der erwärmte erste Schlauchfilm auf eine dritte Temperatur (T₃) abkühlt unter Erhalt des Polymerfilms (P), der die Polyamidzusammensetzung (PZ) enthält.

Es wurde überraschend gefunden, dass durch die Verwendung einer Polyamidzusammensetzung (PZ), die Polyamid 6/6.6 und Polyamid-Oligomere umfasst, wobei aus der Polyamidzusammensetzung (PZ) gemäß ISO 6427 : 2013 im Bereich von 5 bis 25 Gew.-%, bezogen auf das Gesamtgewicht der Polyamidzusammensetzung (PZ), Polyamid-Oligomere extrahiert werden können, der Polymerfilm (P) besser verstreckt werden kann und daher auch ein besseres Schrumpfungsverhalten zeigt. Die erfindungsgemäßen Polymerfilme (P) sind zudem lebensmitteltechnisch unbedenklich und weisen eine für Lebensmittelanwendungen ausreichend niedrige Migration an Monomeren auf, wobei die Messung der Migration für Lebensmittelanwendungen gemäß DIN EN 1186-5:2002 erfolgt.

Ein durch das erfindungsgemäße Verfahren hergestellter Polymerfilm (P) weist zudem eine hohe Weiterreißfestigkeit sowohl in Extrusionsrichtung als auch senkrecht dazu auf. Dies ist insbesondere vorteilhaft, wenn der erfindungsgemäß hergestellte Polymerfilm (P) in einem Verfahren zum Verpacken von Lebensmitteln eingesetzt wird.

Vorteilhaft ist weiterhin, dass der mit dem erfindungsgemäßen Verfahren hergestellte Polymerfilm (P) weniger steif ist als die mit Verfahren, wie sie im Stand der Technik beschrieben sind, hergestellten Polymerfilme. Der erfindungsgemäß hergestellte Polymerfilm (P) weist außerdem ein geringes E-Modul und eine hohe Durchstoßfestigkeit in trockenem Zustand auf. Die hohe Durchstoßfestigkeit ist ebenfalls insbesondere dann von Bedeutung, wenn der Polymerfilm (P) zum Verpacken von Lebensmitteln verwendet wird.

Nachfolgend wird das erfindungsgemäße Verfahren näher erläutert.

### Schritt i)

In Schritt i) wird die Polyamidzusammensetzung (PZ) in geschmolzener Form in einem ersten Extruder bereitgestellt.

"Ein erster Extruder" bedeutet im Rahmen der vorliegenden Erfindung sowohl genau ein erster Extruder als auch zwei oder mehrere erste Extruder.

Üblicherweise werden im erfindungsgemäßen Verfahren so viele erste Extruder eingesetzt wie erste Schichten, die die Polyamidzusammensetzung (PZ) enthalten, in dem herzustellenden Polymerfilm (P) enthalten sein sollen.

Soll der im erfindungsgemäßen Verfahren hergestellte Polymerfilm (P) beispielsweise genau eine erste Schicht enthalten, die die Polyamidzusammensetzung (PZ) enthält, so wird genau ein erster Extruder eingesetzt. Soll der Polymerfilm (P) genau zwei erste Schichten enthalten, die die Polyamidzusammensetzung (PZ) enthalten, so werden genau zwei erste Extruder eingesetzt. Soll der Polymerfilm (P) genau fünf erste Schichten enthalten, die die Polyamidzusammensetzung (PZ) enthalten, so werden genau fünf erste Extruder eingesetzt.

Beispielsweise wird die Polyamidzusammensetzung (PZ) in einem bis elf ersten Extrudern bereitgestellt, bevorzugt in einem bis fünf ersten Extrudern und besonders bevorzugt in einem bis drei ersten Extrudern.

Erfindungsgemäß wird die Polyamidzusammensetzung (PZ) in geschmolzener Form bereitgestellt.

"In geschmolzener Form" bedeutet im Rahmen der vorliegenden Erfindung, dass die Polyamidzusammensetzung (PZ) bei einer Temperatur (T_{PZ}) bereitgestellt wird, die oberhalb der Schmelztemperatur (T_{M(PZ})) der Polyamidzusammensetzung (PZ) liegt. "In geschmolzener Form" bedeutet also, dass die Polyamidzusammensetzung (PZ) eine Temperatur (T_{PZ}) aufweist, die oberhalb der Schmelztemperatur (T_{M(PZ)}) der Polyamidzusammensetzung (PZ) liegt. Liegt die Polyamidzusammensetzung (PZ) in geschmolzener Form vor, so ist die Polyamidzusammensetzung (PZ) fließfähig.

"Fließfähig" bedeutet, dass die Polyamidzusammensetzung (PZ) in dem ersten Extruder gefördert werden kann und dass die Polyamidzusammensetzung (PZ) aus dem ersten Extruder extrudiert werden kann.

Beispielsweise wird die Polyamidzusammensetzung (PZ) in Schritt i) bei einer Temperatur (T_{PZ}) im Bereich von 180 bis 330 °C, bevorzugt im Bereich von 190 bis 300 °C und insbesondere bevorzugt im Bereich von 200 bis 270 °C bereitgestellt, jeweils unter der Voraussetzung, dass die Temperatur (T_{PZ}), bei der die Polyamidzusammensetzung (PZ) bereitgestellt wird, oberhalb der Schmelztemperatur (T_{M(PZ)}) der Polyamidzusammensetzung (PZ) liegt.

Die Polyamidzusammensetzung (PZ) kann nach allen dem Fachmann bekannten Methoden in geschmolzener Form in den ersten Extruder bereitgestellt werden.

Beispielsweise kann die Polyamidzusammensetzung (PZ) in geschmolzener oder in fester Form dem ersten Extruder zugeführt werden. Wird die Polyamidzusammensetzung (PZ) dem ersten Extruder in fester Form zugeführt, so kann sie dem ersten Extruder beispielsweise als Granulat und/oder als Pulver zugeführt werden. Die Polyamidzusammensetzung (PZ) wird dann in dem ersten Extruder aufgeschmolzen und so in geschmolzener Form in dem ersten Extruder bereitgestellt. Diese Ausführungsform ist bevorzugt.

Darüber hinaus ist es möglich, dass die Polyamidzusammensetzung (PZ) direkt in dem ersten Extruder hergestellt wird und so die Polyamidzusammensetzung (PZ) in geschmolzener Form in dem ersten Extruder bereitgestellt wird. Verfahren hierzu sind dem Fachmann bekannt.

So kann die Polyamidzusammensetzung (PZ) in dem ersten Extruder hergestellt werden, indem das Polyamid 6/6.6 und die Polyamid-Oligomere direkt in dem ersten Extruder miteinander vermischt werden. Ebenso ist es möglich, dass die Polyamidzusammensetzung in dem ersten Extruder hergestellt wird, indem die zur weiter unten beschriebenen Herstellung des Polyamid 6/6.6 eingesetzten Komponenten, Caprolactam, Hexamethylendiamin und Adipinsäure, direkt in dem ersten Extruder miteinander polymerisiert werden, wobei sich Polyamid 6/6.6 und Polyamid-Oligomere und damit die Polyamidzusammensetzung bilden.

Es ist darüber hinaus möglich, dass in Schritt i) zusammen mit der Polyamidzusammensetzung (PZ) in geschmolzener Form Additive in dem ersten Extruder bereitgestellt werden. Die Additive werden mit der Polyamidzusammensetzung (PZ) in geschmolzener Form in dem ersten Extruder üblicherweise compoundiert (vermischt). Verfahren hierzu sind dem Fachmann ebenfalls bekannt.

Geeignete Additive sind dem Fachmann bekannt und beispielsweise ausgewählt aus der Gruppe bestehend aus Stabilisatoren, Farbstoffen, Antistatika, Tackifiern, Antiblockmitteln, Verarbeitungshilfsmitteln, Antioxidantien, Lichtstabilisatoren, UV-Absorbern, Gleitmitteln und Nukleierungshilfsmitteln.

Als Farbstoffe sind organische und anorganische Pigmente wie beispielsweise mit einer Schlichte versehenes Titandioxid geeignet. Als Tackifier eignen sich beispielsweise Polyisobutylen (PIB) oder Ethylvinylacetat (EVA). Geeignete Antiblockmittel sind beispielsweise Siliciumdioxid- oder Calciumcarbonatpartikel. Geeignete Lichtstabilisatoren sind beispielsweise sogenannte "HALS" (hindered amine light stabilizers). Als Verarbeitungshilfs- oder Gleitmittel kann beispielsweise Ethylenbisstearamid- (EBS) Wachs eingesetzt werden. Nukleierungshilfsmittel können beispielsweise alle Arten von organischen oder anorganischen Kristallisationskeimbildnern sein, wie zum Beispiel Talk.

Nachfolgend wird die Polyamidzusammensetzung (PZ) näher beschrieben.

### Polyamidzusammensetzung (PZ)

Erfindungsgemäß umfasst die Polyamidzusammensetzung (PZ) Polyamid 6/6.6 und Polyamid-Oligomere. Erfindungsgemäß können aus der Polyamidzusammensetzung (PZ) gemäß ISO 6427 : 2013 im Bereich von 5 bis 25 Gew.-%, bezogen auf das Gesamtgewicht der Polyamidzusammensetzung (PZ), Polyamid-Oligomere extrahiert werden.

Bevorzugt können aus der Polyamidzusammensetzung (PZ) gemäß ISO 6427 : 2013 im Bereich von 7 bis 24 Gew.-% und insbesondere bevorzugt im Bereich von 10 bis 23 Gew.-% Polyamid-Oligomere extrahiert werden, bezogen auf das Gesamtgewicht der Polyamidzusammensetzung (PZ).

Zur Extraktion der Polyamid-Oligomere aus der Polyamidzusammensetzung (PZ) gemäß ISO 6427 : 2013 wird die Polyamidzusammensetzung (PZ) auf eine Partikelgröße im Bereich von 0,5 bis 0,7 mm vermahlen und dann für 6 Stunden in siedendem Methanol als Extraktionsmittel extrahiert, wobei das Extraktionsmittel mehrfach gewechselt wird. Am Ende der Extraktion werden feste Bestandteile abgetrennt. Dann wird das erhaltene Extrakt getrocknet, die extrahierbaren Bestandteile (Polyamid-Oligomere) bleiben zurück und werden gewogen und daraus der Anteil an Polyamid-Oligomeren, die aus der Polyamidzusammensetzung (PZ) extrahiert werden können, bestimmt.

Die Polyamidzusammensetzung (PZ) kann darüber hinaus zusätzliche Polymere, insbesondere weitere Polyamide, enthalten. Bevorzugt besteht die Polyamidzusammensetzung (PZ) aus Polyamid 6/6.6 und Polyamid-Oligomeren.

Die Polyamidzusammensetzung (PZ) weist üblicherweise eine Glasübergangstemperatur (T_{G(PZ)}) auf. Die Glasübergangstemperatur (T_{G(PZ)}) liegt beispielsweise im Bereich von 20 bis 70 °C, bevorzugt im Bereich von 30 bis 65 °C und insbesondere bevorzugt im Bereich von 40 bis 60 °C, bestimmt gemäß ISO 11357-2:2013.

Gegenstand der vorliegenden Erfindung ist daher auch ein Verfahren, bei dem die Polyamidzusammensetzung (PZ) eine Glasübergangstemperatur (T_{G(PZ)}) aufweist, wobei die Glasübergangstemperatur (T_{G(PZ)}) im Bereich von 20 bis 70 °C liegt.

Die Glasübergangstemperatur (T_{G(PZ)}) der Polyamidzusammensetzung (PZ) bezieht sich entsprechend der ISO 11357-2:2013 im Rahmen der vorliegenden Erfindung auf die Glasübergangstemperatur (T_{G(PZ)}) der trockenen Polyamidzusammensetzung (PZ).

"Trocken" bedeutet im Rahmen der vorliegenden Erfindung, dass die Polyamidzusammensetzung (PZ) weniger als 1 Gew.-%, bevorzugt weniger als 0,5 Gew.-% und insbesondere bevorzugt weniger als 0,1 Gew.-% Wasser enthält, bezogen auf das Gesamtgewicht der Polyamidzusammensetzung (PZ). Mehr bevorzugt bedeutet "trocken", dass die Polyamidzusammensetzung (PZ) kein Wasser enthält, und am meisten bevorzugt, dass die Polyamidzusammensetzung (PZ) kein Lösungsmittel enthält.

Es versteht sich von selbst, dass Polyamid-Oligomere im Rahmen der vorliegenden Erfindung nicht als Lösungsmittel verstanden werden. Es ist daher erfindungsgemäß am meisten bevorzugt, dass "trocken" im Rahmen der vorliegenden Erfindung bedeutet, dass die Polyamidzusammensetzung (PZ) kein von Polyamid-Oligomeren verschiedenes Lösungsmittel enthält.

Die Glasübergangstemperatur (T_{G(PZ)}) der Polyamidzusammensetzung (PZ) liegt bevorzugt unterhalb der Glasübergangstemperatur (T_{G(P)}) des Polyamid 6/6.6.

Die Polyamidzusammensetzung (PZ) weist darüber hinaus üblicherweise eine Schmelztemperatur (T_{M(PZ})) auf. Die Schmelztemperatur (T_{M(PZ)}) der Polyamidzusammensetzung (PZ) liegt beispielsweise im Bereich von 178 bis 187 °C, bevorzugt im Bereich von 179 bis 186 °C und insbesondere bevorzugt im Bereich von 180 bis 185 °C, bestimmt gemäß ISO 11357-3:2011.

Gegenstand der vorliegenden Erfindung ist daher auch ein Verfahren, bei dem die Polyamidzusammensetzung (PZ) eine Schmelztemperatur (T_{M(PZ)}), die im Bereich von 178 bis 187 °C liegt, aufweist.

Die Polyamidzusammensetzung (PZ) weist im Allgemeinen eine Viskositätszahl (VZ_{(PZ)}) im Bereich von 150 bis 350 ml/g auf, bestimmt in einer 0,5 Gew.-%igen Lösung in 96 Gew.-%iger Schwefelsäure bei 25 °C gemäß EN ISO 307 : 2007 + Amd 1 : 2013.

Bevorzugt liegt die Viskositätszahl (VZ_{(PZ)}) der Polyamidzusammensetzung (PZ) im Bereich von 175 bis 325 ml/g und besonders bevorzugt im Bereich von 200 bis 300 ml/g, bestimmt in einer 0,5 Gew.-%igen Lösung in 96 Gew.-%iger Schwefelsäure bei 25 °C gemäß EN ISO 307 : 2007 + Amd 1 : 2013.

Gegenstand der vorliegenden Erfindung ist daher auch ein Verfahren, bei dem die Polyamidzusammensetzung (PZ) eine Viskositätszahl (VZ_{(PZ)}) im Bereich von 150 bis 350 ml/g aufweist, bestimmt, in einer 0,5 Gew.-%igen Lösung in 96 Gew.-%iger Schwefelsäure bei 25 °C gemäß EN ISO 307 : 2007 + Amd 1 : 2013.

### Polyamid 6/6.6

"Ein Polyamid 6/6.6" bedeutet im Rahmen der vorliegenden Erfindung sowohl genau ein Polyamid 6/6.6 als auch eine Mischung aus zwei oder mehreren Polyamiden 6/6.6.

Polyamid 6/6.6 ist ein Copolymer aus Polyamid 6 und Polyamid 6.6.

Polyamid 6 ist ein Polymer, das von Caprolactam abgeleitete Einheiten enthält. Polyamid 6.6 ist ein Polymer, das von Hexamethylendiamin und Hexandisäure (Adipinsäure) abgeleitete Einheiten enthält.

Bevorzugt besteht das Polyamid 6/6.6 aus Polyamid 6 und Polyamid 6.6. Daher besteht das Polyamid 6/6.6 bevorzugt aus Einheiten, die von Caprolactam, von Hexamethylendiamin und von Adipinsäure abgeleitet sind.

Anders ausgedrückt ist Polyamid 6/6.6 also bevorzugt ein Copolymer, das hergestellt ist ausgehend von Caprolactam, Hexamethylendiamin und Adipinsäure.

Das Polyamid 6/6.6 ist bevorzugt ein statistisches Copolymer.

Das Polyamid 6/6.6 umfasst bevorzugt im Bereich von 70 bis 78 Gew.-% Polyamid 6-Einheiten und im Bereich von 22 bis 30 Gew.-% Polyamid 6.6-Einheiten, jeweils bezogen auf das Gesamtgewicht des Polyamid 6/6.6.

Besonders bevorzugt umfasst das Polyamid 6/6.6 im Bereich von 73 bis 77 Gew.-% Polyamid 6-Einheiten und im Bereich von 23 bis 27 Gew.-% Polyamid 6.6-Einheiten, jeweils bezogen auf das Gesamtgewicht des Polyamid 6/6.6.

Am meisten bevorzugt umfasst das Polyamid 6/6.6 im Bereich von 74,5 bis 75,5 Gew.-% Polyamid 6-Einheiten und im Bereich von 24,5 bis 25,5 Gew.-% Polyamid 6.6-Einheiten, jeweils bezogen auf das Gesamtgewicht des Polyamid 6/6.6.

Gegenstand der vorliegenden Erfindung ist daher auch ein Verfahren, bei dem das Polyamid 6/6.6 im Bereich von 70 bis 78 Gew.-% Polyamid 6-Einheiten und im Bereich von 22 bis 30 Gew.-% Polyamid 6.6-Einheiten umfasst, jeweils bezogen auf das Gesamtgewicht des Polyamid 6/6.6.

Die Bestimmung des Anteils an Polyamid 6.6-Einheiten in dem Polyamid 6/6.6 erfolgt im Rahmen der vorliegenden Erfindung folgendermaßen: Das Polyamid 6/6.6 wird in verdünnter (20 Gew.-%ig) Salzsäure hydrolysiert. Dabei werden die von Hexamethylendiamin abgeleiteten Einheiten protoniert, wobei das Chloridion der Salzsäure das entsprechende Gegenion bildet. Mittels Ionenaustauscher wird dann dieses Chloridion gegen eine Hydroxidion ausgetauscht, wobei Hexamethylendiamin freigesetzt wird. Die Konzentration an freigesetztem Hexamethylendiamin wird durch Titration mit 0,1 molarer Salzsäure bestimmt. Ausgehend von der Konzentration des Hexamethylendiamins kann dann nach dem Fachmann bekannten Methoden der Anteil an Polyamid 6.6 in dem Polyamid 6/6.6 berechnet werden.

Das Polyamid 6/6.6 weist üblicherweise eine Glasübergangstemperatur (T_{G(P)}) auf. Die Glasübergangstemperatur (T_{G(P)}) liegt beispielsweise im Bereich von 20 bis 70 °C, bevorzugt im Bereich von 30 bis 65 °C und insbesondere bevorzugt im Bereich von 40 bis 60 °C, bestimmt gemäß ISO 11357-2:2013.

Gegenstand der vorliegenden Erfindung ist daher auch ein Verfahren, bei dem das Polyamid 6/6.6 eine Glasübergangstemperatur (T_{G(P)}) aufweist, wobei die Glasübergangstemperatur (T_{G(P)}) im Bereich von 20 bis 70 °C liegt.

Die Glasübergangstemperatur (T_{G(P)}) des Polyamid 6/6.6 bezieht sich entsprechend der ISO 11357-2:2013 im Rahmen der vorliegenden Erfindung auf die Glasübergangstemperatur (T_{G(P)}) des trockenen Polyamid 6/6.6.

"Trocken" bedeutet im Rahmen der vorliegenden Erfindung, dass das Polyamid 6/6.6 weniger als 1 Gew.-%, bevorzugt weniger als 0,5 Gew.-% und insbesondere bevorzugt weniger als 0,1 Gew.-% Wasser enthält, bezogen auf das Gesamtgewicht des Polyamid 6/6.6. Mehr bevorzugt bedeutet "trocken", dass das Polyamid 6/6.6 kein Wasser enthält, und am meisten bevorzugt, dass das Polyamid 6/6.6 kein Lösungsmittel enthält.

Es versteht sich von selbst, dass zur Bestimmung der Glasübergangstemperatur (T_{G(P)}) das Polyamid 6/6.6 auch keine Polyamid-Oligomere enthält.

Das Polyamid 6/6.6 weist darüber hinaus üblicherweise eine Schmelztemperatur (T_{M(P)}) auf. Die Schmelztemperatur (T_{M(P)}) des Polyamid 6/6.6 liegt beispielsweise im Bereich von 180 bis 187 °C, bevorzugt im Bereich von 181 bis 186 °C und insbesondere bevorzugt im Bereich von 182 bis 185 °C, bestimmt gemäß ISO 11357-3:2011.

Gegenstand der vorliegenden Erfindung ist daher auch ein Verfahren, bei dem das Polyamid 6/6.6 eine Schmelztemperatur (T_{M(P)}) aufweist, wobei die Schmelztemperatur (T_{M(P)}) im Bereich von 180 bis 187 °C liegt.

Das Polyamid 6/6.6 weist im Allgemeinen eine Viskositätszahl (VZ_{(P)}) im Bereich von 150 bis 350 ml/g auf, bestimmt in einer 0,5 Gew.-%igen Lösung in 96 Gew.-%iger Schwefelsäure bei 25 °C gemäß EN ISO 307 : 2007 + Amd 1 : 2013.

Bevorzugt liegt die Viskositätszahl (VZ_{(P)}) des Polyamid 6/6.6 im Bereich von 175 bis 325 ml/g und besonders bevorzugt im Bereich von 200 bis 300 ml/g, bestimmt in einer 0,5 Gew.-%igen Lösung in 96 Gew.-%iger Schwefelsäure bei 25 °C gemäß EN ISO 307 : 2007 + Amd 1 : 2013.

Gegenstand der vorliegenden Erfindung ist daher auch ein Verfahren, bei dem das Polyamid 6/6.6 eine Viskositätszahl (VZ_{(P)}) im Bereich von 150 bis 350 ml/g aufweist, bestimmt in einer 0,5 Gew.-%igen Lösung in 96 Gew.-%iger Schwefelsäure bei 25 °C gemäß EN ISO 307 : 2007 + Amd 1 : 2013..

Die Schmelz-Volumen-Fließrate (melt volume flow rate, MVR) bei 250 °C und 5 kg Gewicht liegt üblicherweise im Bereich von 1 bis 100 ml/10 Minuten, bevorzugt im Bereich von 2 bis 75 ml/10 Minuten und besonders bevorzugt im Bereich von 5 bis 50 ml/10 Minuten.

Das Polyamid 6/6.6 weist vorzugsweise ein zahlenmittleres Molekulargewicht (Mₙ) im Bereich von 20 000 bis 40 000 g/mol auf. Außerdem bevorzugt weist das Polyamid 6/6.6 ein gewichtsmittleres Molekulargewicht (M_{w}) im Bereich von 70 000 bis 150 000 g/mol auf, bestimmt mittels SEC (size exclusion chromatography).

Die Bestimmung des zahlenmittleren Molekulargewichts (Mₙ) und des gewichtsmittleren Molekulargewichts (M_{w}) mittels SEC wurde folgendermaßen durchgeführt: Es wurde eine Säule mit einer Säulentemperatur von 40 °C verwendet, die Durchflussgeschwindigkeit betrug 1 ml/min und die Injektion hatte in Volumen von 100 µl. Die Konzentration der Probe lag bei 2 mg/ml, als Elutionsmittel wurde Hexafluorisopropanol mit 0,05 % Trifluoressigsäure-Kaliumsalz eingesetzt. Die Kalibrierung erfolgte mit eng verteilten PMMA-Standards der Firma PSS mit Molekulargewichten von 800 bis 1 820 000 g/mol; Werte außerhalb des Elutionsbereichs wurden extrapoliert.

Verfahren zur Herstellung des Polyamid 6/6.6 sind dem Fachmann bekannt und beispielsweise in der WO 2010/066769 beschrieben. Bei dem darin beschriebenen Verfahren zur Herstellung von Copolyamiden, insbesondere von Polyamid 6/6.6 erfolgt die Herstellung kontinuierlich ausgehend von Lactamen und Salzen von Diaminen und Dicarbonsäuren.

### Polyamid-Oligomere

Unter "Polyamid-Oligomer" werden im Rahmen der vorliegenden Erfindung Verbindungen verstanden, die Amideinheiten enthalten und bei der Herstellung von Polyamiden gebildet werden. Diese sind dem Fachmann als solche bekannt.

Im Rahmen der vorliegenden Erfindung weisen Polyamid-Oligomere vorzugsweise ein zahlenmittleres Molekulargewicht (Mn) im Bereich von 100 bis 10 000 g/mol, bevorzugt im Bereich von 200 bis 8 000 g/mol und insbesondere bevorzugt im Bereich von 500 bis 5 000 g/mol auf. Das zahlenmittlere Molekulargewicht (Mn) wird mit Hilfe von SEC wie vorstehend beschrieben bestimmt.

Bevorzugt bilden sich die erfindungsgemäßen Polyamid-Oligomere bei der Herstellung des in der Polyamidzusammensetzung (PZ) enthaltenen Polyamid 6/6.6. Daher enthalten Polyamid-Oligomere bevorzugt Einheiten, die von Caprolactam und/oder Adipinsäure und/oder Hexamethylendiamin abgeleitet sind. Bevorzugt sind die Polyamid-Oligomere cyclische Polyamid-Oligomere.

Es ist daher erfindungsgemäß bevorzugt, dass die Polyamidzusammensetzung (PZ), die Polyamid 6/6.6 und Polyamid-Oligomere umfasst, bei der Herstellung des Polyamid 6/6.6 gebildet wird.

### Schritt ii)

In Schritt ii) wird die in Schritt i) bereitgestellte Polyamidzusammensetzung (PZ) in geschmolzener Form aus dem ersten Extruder aus einer Ringdüse extrudiert unter Erhalt eines Schlauchs, der die Polyamidzusammensetzung (PZ) in geschmolzener Form enthält.

"Eine Ringdüse" bedeutet im Rahmen der vorliegenden Erfindung sowohl genau eine Ringdüse als auch zwei oder mehrere Ringdüsen. Erfindungsgemäß bevorzugt ist genau eine Ringdüse.

Als Ringdüse eignen sich alle dem Fachmann bekannten Ringdüsen, die es ermöglichen, einen Schlauch aus der Polyamidzusammensetzung (PZ) in geschmolzener Form zu extrudieren. Geeignete Ringdüsen sind dem Fachmann als solche bekannt.

Wird in einer bevorzugten Ausführungsform der vorliegenden Erfindung der weiter unten beschriebene Schritt i1) durchgeführt, so ist es bevorzugt, dass in Schritt ii) die Polyamidzusammensetzung (PZ) in geschmolzener Form aus dem ersten Extruder mit dem weiter unten beschriebenen mindestens einen weiteren Polymer (wP) in geschmolzener Form aus dem weiteren Extruder in der Ringdüse zusammengeführt wird.
Insbesondere bevorzugt werden in Schritt ii) die Polyamidzusammensetzung (PZ) in geschmolzener Form aus dem ersten Extruder mit dem mindestens einen weiteren Polymer (wP) in geschmolzener Form aus dem weiteren Extruder so in der Düse zusammengeführt, dass der in Schritt ii) erhaltene Schlauch, der die Polyamidzusammensetzung (PZ) in geschmolzener Form enthält, mindestens eine erste Schicht enthält, die die Polyamidzusammensetzung (PZ) in geschmolzener Form enthält, und mindestens eine weitere Schicht enthält, die das mindestens eine weitere Polymer (wP) in geschmolzener Form enthält.

Beispielsweise liegt die Dicke des Schlauchs, der die Polyamidzusammensetzung (PZ) in geschmolzener Form enthält, im Bereich von 10 µm bis 1 mm, bevorzugt im Bereich von 20 bis 700 µm und insbesondere bevorzugt im Bereich von 50 bis 500 µm.

Gegenstand der vorliegenden Erfindung ist daher auch ein Verfahren, bei dem der in Schritt ii) erhaltene Schlauch eine Dicke im Bereich von 10 µm bis 1 mm aufweist.

### Schritt iii)

In Schritt iii) wird der in Schritt ii) erhaltene Schlauch, der die Polyamidzusammensetzung (PZ) in geschmolzener Form enthält, in einem Wasserbad auf eine erste Temperatur (T₁) abgekühlt, wobei die Polyamidzusammensetzung (PZ) erstarrt unter Erhalt eines ersten Schlauchfilms, der die Polyamidzusammensetzung (PZ) enthält.

Die erste Temperatur (T₁), auf die der Schlauch abgekühlt wird, liegt beispielsweise unterhalb der Schmelztemperatur (T_{M(PZ})) der Polyamidzusammensetzung (PZ). Bevorzugt liegt die erste Temperatur (T₁) unterhalb der Glasübergangstemperatur (T_{G(PZ)}) der Polyamidzusammensetzung (PZ).

Beispielsweise liegt die erste Temperatur (T₁) in Schritt iii) im Bereich von 5 bis 95 °C, bevorzugt im Bereich von 10 bis 80 °C und insbesondere bevorzugt im Bereich von 20 bis 70 °C.

Gegenstand der vorliegenden Erfindung ist daher auch ein Verfahren, bei dem die erste Temperatur (T₁) in Schritt iii) im Bereich von 5 bis 60 °C liegt.

Das Wasserbad enthält Wasser. Das Wasserbad kann darüber hinaus weitere Komponenten wie beispielsweise Alkohole enthalten.

Erfindungsgemäß bevorzugt besteht das Wasserbad aus Wasser.

Die Temperatur des Wassersbads in Schritt iii) liegt beispielsweise im Bereich von 5 bis 95 °C, bevorzugt im Bereich von 10 bis 70 °C und insbesondere bevorzugt im Bereich von 15 bis 50 °C.

Die Schritte ii) und iii) können nacheinander oder gleichzeitig durchgeführt werden. Es versteht sich von selbst, dass, wenn die Schritte ii) und iii) gleichzeitig durchgeführt werden, der Schlauch, der die Polyamidzusammensetzung (PZ) in geschmolzener Form enthält, nur kurzzeitig und intermediär erhalten wird. Üblicherweise wird dann bei der Extrusion in Schritt ii) die Polyamidzusammensetzung (PZ) in geschmolzener Form direkt als Schlauch in das Wasserbad in Schritt iii) extrudiert und darin abgekühlt, und die Polyamidzusammensetzung (PZ) erstarrt unter Erhalt des ersten Schlauchfilms.

Es ist darüber hinaus möglich, dass der Schlauch, der die Polyamidzusammensetzung (PZ) enthält, während des Abkühlens in Schritt iii) über ein erstes Rollensystem geführt wird. Dabei wird der Schlauch in seiner Länge verstreckt.

Gegenstand der vorliegenden Erfindung ist daher auch ein Verfahren, bei dem der Schlauch, der die Polyamidzusammensetzung (PZ) enthält, während des Abkühlens in Schritt iii) über ein erstes Rollensystem geführt wird, wobei der Schlauch in seiner Länge verstreckt wird.

Beim Verstrecken des Schlauchs richten sich die Polymerketten des in der Polyamidzusammensetzung (PZ) enthaltenen Polyamid 6/6.6 aus, und die Kristallinität des Polyamid 6/6.6 - und damit auch der Polyamidzusammensetzung (PZ) - kann sich erhöhen. Dieses Verfahren ist dem Fachmann bekannt.

Es ist darüber hinaus möglich, dass sich auch die Polymerketten des gegebenenfalls in dem Schlauch enthaltenen mindestens einen weiteren Polymers (wP) beim Verstrecken ausrichten. Dadurch kann auch die Kristallinität des mindestens einen weiteren Polymers (wP) sich erhöhen.

Wird der Schlauch in seiner Länge verstreckt, so bedeutet dies, dass der Schlauch in Extrusionsrichtung verstreckt wird. Die Polymerketten des in der Polyamidzusammensetzung (PZ) enthaltenen Polyamid 6/6.6 sowie gegebenenfalls des mindestens einen weiteren Polymers (wP) richten sich parallel zu der Richtung, in die verstreckt wird, aus.

### Schritt iv)

In Schritt iv) wird der in Schritt iii) erhaltene erste Schlauchfilm auf eine zweite Temperatur (T₂) erwärmt unter Erhalt eines erwärmten ersten Schlauchfilms, der die Polyamidzusammensetzung (PZ) enthält.

Das Erwärmen des ersten Schlauchfilms kann nach allen dem Fachmann bekannten Methoden erfolgen, beispielsweise durch Infrarotstrahler oder einen um den Schlauch liegenden Heizring.

Die zweite Temperatur (T₂), auf die der erste Schlauchfilm erwärmt wird, liegt bevorzugt oberhalb der Glasübergangstemperatur (T_{G(PZ)}) der Polyamidzusammensetzung (PZ). Es ist darüber hinaus bevorzugt, dass die zweite Temperatur (T₂) unterhalb der Schmelztemperatur (T_{M(PZ)}) der Polyamidzusammensetzung (PZ) liegt.

Gegenstand der vorliegenden Erfindung ist daher auch ein Verfahren, bei dem die Polyamidzusammensetzung (PZ) eine Glasübergangstemperatur (T_{G(PZ)}) und eine Schmelztemperatur (T_{M(PZ})) aufweist und dass die zweite Temperatur (T₂) in Schritt iv) oberhalb der Glasübergangstemperatur (T_{G(PZ)}) und unterhalb der Schmelztemperatur (T_{M(PZ)}) der Polyamidzusammensetzung (PZ) liegt.

Beispielsweise liegt die zweite Temperatur (T₂) in Schritt iv) im Bereich von 20 bis 190 °C, bevorzugt im Bereich von 50 bis 180 °C und insbesondere bevorzugt im Bereich von 70 bis 170 °C.

Gegenstand der vorliegenden Erfindung ist daher auch ein Verfahren, bei dem in Schritt iv) der in Schritt iii) erhaltene erste Schlauchfilm auf eine zweite Temperatur (T₂) erwärmt wird, die im Bereich von 20 bis 190 °C liegt.

Es versteht sich von selbst, dass die zweite Temperatur (T₂), auf die der erste Schlauchfilm in Schritt iv) erwärmt wird, oberhalb der ersten Temperatur (T₁) liegt, auf die der Schlauch in Schritt iii) abgekühlt wird.

### Schritt v)

In Schritt v) wird in den in Schritt iv) erhaltenen erwärmten ersten Schlauchfilm Luft eingeblasen, wobei der erwärmte erste Schlauchfilm in seiner Breite verstreckt wird und wobei der erwärmte erste Schlauchfilm auf eine dritte Temperatur (T₃) abkühlt unter Erhalt des Polymerfilms (P), der die Polyamidzusammensetzung (PZ) enthält.

Unter "Luft" wird im Rahmen der vorliegenden Erfindung das Gasgemisch der Erdatmosphäre verstanden.

In einer weiteren Ausführungsform der vorliegenden Erfindung wird in Schritt v) in den in Schritt iv) erhaltenen erwärmten ersten Schlauchfilm mindestens ein Gas, ausgewählt aus der Gruppe bestehend aus Stickstoff, Argon und Kohlendioxid, eingeblasen.

Das Einblasen von Luft in den in Schritt iv) erhaltenen erwärmten ersten Schlauchfilm kann nach allen dem Fachmann bekannten Methoden erfolgen.

Der erwärmte erste Schlauchfilm wird dabei in seiner Breite verstreckt. Dies bedeutet, dass er senkrecht zur Extrusionsrichtung verstreckt wird.

Während Schritt v) kann der erwärmte erste Schlauchfilm zusätzlich über ein zweites Rollensystem geführt werden, wobei der erwärmte erste Schlauchfilm zusätzlich in seiner Länge verstreckt wird.

Gegenstand der vorliegenden Erfindung ist daher auch ein Verfahren, bei dem der erwärmte erste Schlauchfilm, der die Polyamidzusammensetzung (PZ) enthält, während des Einblasens von Luft in Schritt v) über ein zweites Rollensystem geführt wird, wobei der erwärmte erste Schlauchfilm in seiner Länge verstreckt wird.

Wenn der erwärmte erste Schlauchfilm während Schritt v) über ein zweites Rollensystem geführt wird und/oder der Schlauch während des Abkühlens in Schritt iii) über ein erstes Rollensystem geführt wird, so ist der in Schritt v) erhaltene Polymerfilm (P) ein Polymerfilm (P), der sowohl in seiner Extrusionsrichtung als auch senkrecht dazu verstreckt ist. Es handelt sich dann um einen biaxial orientierten Polymerfilm (P).

"Biaxial orientiert" bedeutet, dass die Polymerketten im Wesentlichen in zwei verschiedene, bevorzugt senkrecht zueinander stehende Richtungen ausgerichtet sind.

In Schritt v) kühlt der erste Schlauchfilm auf eine dritte Temperatur (T₃) ab. Das Abkühlen auf die dritte Temperatur (T₃) kann allein durch das Einblasen von Luft in den erwärmten ersten Schlauchfilm erfolgen. Darüber hinaus ist es möglich, dass der erwärmte erste Schlauchfilm während Schritt v) zusätzlich gekühlt wird.

Die dritte Temperatur (T₃), auf die der erwärmte erste Schlauchfilm abgekühlt wird, liegt vorzugsweise unterhalb der Glasübergangstemperatur (T_{G(PZ)}) der Polyamidzusammensetzung (PZ).

Beispielsweise liegt die dritte Temperatur (T₃) im Bereich von 5 bis 70 °C, bevorzugt im Bereich von 10 bis 60 °C und insbesondere bevorzugt im Bereich von 15 bis 50 °C.

Es versteht sich von selbst, dass die dritte Temperatur (T₃), auf die der erwärmte erste Schlauchfilm in Schritt v) abgekühlt wird, unterhalb der zweiten Temperatur (T₂) liegt, auf die der erste Schlauchfilm in Schritt iv) erwärmt wird.

Erfindungsgemäß bevorzugt werden in Anschluss an Schritt v) die folgenden Schritte durchgeführt:
vi) Führen des in Schritt v) erhaltenen Polymerfilms (P) über mindestens eine dritte Rolle,
vii) Erwärmen des in Schritt v) erhaltenen Polymerfilms (P) auf eine vierte Temperatur (T₄), die oberhalb der Glasübergangstemperatur (T_{G(PZ)}) der Polyamidzusammensetzung (PZ) liegt, unter Erhalt eines erwärmten Polymerfilms (P),
viii) Führen des in Schritt vii) erhaltenen erwärmten Polymerfilms (P) über mindestens eine vierte Rolle unter Erhalt des Polymerfilms (P),
wobei der erwärmte Polymerfilm (P) zwischen Schritt vii) und Schritt viii) während Schritt viii) und/oder im Anschluss an Schritt viii) auf eine fünfte Temperatur (T₅), die unterhalb der Glasübergangstemperatur (T_{G(PZ)}) der Polyamidzusammensetzung (PZ) liegt, abgekühlt wird.

Gegenstand der vorliegenden Erfindung ist daher auch ein Verfahren, bei dem im Anschluss an Schritt v) die folgenden Schritte durchgeführt werden:
vi) Führen des in Schritt v) erhaltenen Polymerfilms (P) über mindestens eine dritte Rolle,
vii) Erwärmen des in Schritt v) erhaltenen Polymerfilms (P) auf eine vierte Temperatur (T₄), die oberhalb der Glasübergangstemperatur (T_{G(PZ)}) der Polyamidzusammensetzung (PZ) liegt, unter Erhalt eines erwärmten Polymerfilms (P),
viii) Führen des in Schritt vii) erhaltenen erwärmten Polymerfilms (P) über mindestens eine vierte Rolle, unter Erhalt des Polymerfilms (P),
wobei der erwärmte Polymerfilm (P) zwischen Schritt vii) und Schritt viii), während Schritt viii) und/oder im Anschluss an Schritt viii) auf eine fünfte Temperatur (T₅), die unterhalb der Glasübergangstemperatur (T_{G(PZ)}) der Polyamidzusammensetzung (PZ) liegt, abgekühlt wird.

Die Schritte vi) bis viii), die gegebenenfalls im Anschluss an Schritt v) durchgeführt werden, werden auch als "annealing" bezeichnet.

In Schritt iv) wird der Polymerfilm (P) über mindestens eine dritte Rolle geführt.

"Mindestens eine dritte Rolle" bedeutet im Rahmen der vorliegenden Erfindung sowohl genau eine dritte Rolle als auch ein drittes Rollensystem.

Bevorzugt wird der Polymerfilm (P) in Schritt iv) über ein drittes Rollensystem geführt.

Geeignete dritte Rollen sind dem Fachmann bekannt. Ebenso sind dem Fachmann geeignete dritte Rollensysteme bekannt.

Die mindestens eine dritte Rolle weist üblicherweise eine erste Umdrehungsgeschwindigkeit auf.

In einer Ausführungsform der vorliegenden Erfindung werden die Schritte v) und vi) gleichzeitig durchgeführt. Dann wird in Schritt v) der erwärmte erste Schlauchfilm zusätzlich über ein zweites Rollensystem geführt und das zweite Rollensystem ist gleich der mindestens einen dritten Rolle, über die der Polymerfilm (P) in Schritt vi) geführt wird.
Gegenstand der vorliegenden Erfindung ist daher auch ein Verfahren, bei dem der erwärmte erste Schlauchfilm, der die Polyamidzusammensetzung (PZ) enthält, während des Einblasens von Luft in Schritt v) über ein zweites Rollensystem geführt wird, wobei der erwärmte erste Schlauchfilm in seiner Länge verstreckt wird und im Anschluss an Schritt v) die folgenden Schritte durchgeführt werden:
vii) Erwärmen des in Schritt v) erhaltenen Polymerfilms (P) auf eine vierte Temperatur (T₄), die oberhalb der Glasübergangstemperatur (T_{G(PZ)}) der Polyamidzusammensetzung (PZ) liegt, unter Erhalt eines erwärmten Polymerfilms (P),
viii) Führen des in Schritt vii) erhaltenen erwärmten Polymerfilms (P) über mindestens eine vierte Rolle unter Erhalt des Polymerfilms (P),
wobei der erwärmte Polymerfilm (P) zwischen Schritt vii) und Schritt viii) während Schritt viii) und/oder im Anschluss an Schritt viii) auf eine fünfte Temperatur (T₅), die unterhalb der Glasübergangstemperatur (T_{G(PZ)}) der Polyamidzusammensetzung (PZ) liegt, abgekühlt wird.

In Schritt vii) wird der Polymerfilm (P) auf eine vierte Temperatur (T₄) erwärmt.

Das Erwärmen erfolgt bevorzugt, nachdem der Polymerfilm (P) in Schritt vi) über die mindestens eine dritte Rolle geführt worden ist. Wenn der erwärmte erste Schlauchfilm während Schritt v) über ein zweites Rollensystem geführt wird und die mindestens eine dritte Rolle gleich dem zweiten Rollensystem ist, wird das Erwärmen bevorzugt nach dem Führen über das zweite Rollensystem durchgeführt.

Das Erwärmen des erhaltenen Polymerfilms (P) auf die vierte Temperatur (T₄) in Schritt vii) kann nach allen dem Fachmann bekannten Methoden erfolgen.

Die vierte Temperatur (T₄) liegt erfindungsgemäß oberhalb der Glasübergangstemperatur (T_{G(PZ)}) der Polyamidzusammensetzung (PZ). Es ist darüber hinaus bevorzugt, dass die vierte Temperatur (T₄) unterhalb der Schmelztemperatur (T_{M(PZ)}) der Polyamidzusammensetzung (PZ) liegt.

Gegenstand der vorliegenden Erfindung ist daher auch ein Verfahren, bei dem die vierte Temperatur (T₄) unterhalb der Schmelztemperatur (T_{M(PZ)}) der Polyamidzusammensetzung (PZ) liegt.

Es versteht sich von selbst, dass die vierte Temperatur (T₄), auf die der Polymerfilm (P) gegebenenfalls in Schritt vii) erwärmt wird, oberhalb der dritten Temperatur (T₃) liegt, auf die der erwärmte erste Schlauchfilm in Schritt v) abgekühlt wird.

In Schritt viii) wird der erwärmte Polymerfilm (P) über mindestens eine vierte Rolle geführt.

"Mindestens eine vierte Rolle" bedeutet im Rahmen der vorliegenden Erfindung sowohl genau eine vierte Rolle als auch ein viertes Rollensystem.

Die mindestens eine vierte Rolle weist üblicherweise eine zweite Umdrehungsgeschwindigkeit auf.

Erfindungsgemäß bevorzugt ist die erste Umdrehungsgeschwindigkeit der mindestens einen dritten Rolle höher als die zweite Umdrehungsgeschwindigkeit der mindestens einen vierten Rolle.

Der erwärmte Polymerfilm (P) wird zwischen Schritt vii) und Schritt viii) während Schritt viii) und/oder im Anschluss an Schritt viii) auf eine fünfte Temperatur (T₅) abgekühlt. Die fünfte Temperatur (T₅) liegt unterhalb der Glasübergangstemperatur (T_{G(PZ)}) der Polyamidzusammensetzung (PZ).

Es versteht sich von selbst, dass die fünfte Temperatur (T₅) unterhalb der vierten Temperatur (T₄) liegt.

Das Abkühlen auf die fünfte Temperatur (T₅) kann nach allen dem Fachmann bekannten Methoden erfolgen, beispielsweise durch Kühlung mittels Luft.

Indem die Schritte vi) bis viii) durchgeführt werden, wird ein Polymerfilm (P) erhalten, der einen besonders niedrigen Vorschrumpf aufweist. Der Polymerfilm (P) schrumpft also zwischen seiner Herstellung und seiner Verwendung, beispielsweise als Verpackungsfilm, nicht oder nur in geringem Ausmaß. Entsprechendes gilt, wenn der erwärmte erste Schlauchfilm in Schritt v) über ein zweites Rollensystem geführt wird und anschließend die Schritte vii) und viii) durchgeführt werden.

### Polymerfilm (P)

Der erfindungsgemäß hergestellte Polymerfilm (P) enthält die Polyamidzusammensetzung (PZ).

Bevorzugt enthält der erfindungsgemäß hergestellte Polymerfilm (P) im Bereich von 0,1 bis 80 Gew.-% der Polyamidzusammensetzung (PZ), bezogen auf das Gesamtgewicht des Polymerfilms (P).

Besonders bevorzugt enthält der Polymerfilm (P) im Bereich von 0,1 bis 50 Gew.-% der Polyamidzusammensetzung (PZ), mehr bevorzugt im Bereich von 5 bis 45 Gew.-% der Polyamidzusammensetzung (PZ) und insbesondere bevorzugt im Bereich von 10 bis 40 Gew.-% der Polyamidzusammensetzung (PZ), jeweils bezogen auf das Gesamtgewicht des Polymerfilms (P).

Gegenstand der vorliegenden Erfindung ist daher auch ein Verfahren, bei dem der Polymerfilm (P) im Bereich von 0,1 bis 80 Gew.-%, bezogen auf das Gesamtgewicht des Polymerfilms (P), der Polyamidzusammensetzung (PZ) enthält.

Darüber hinaus enthält der Polymerfilm bevorzugt im Bereich von 20 bis 99,9 Gew.-% mindestens eines weiteren Polymers (wP), besonders bevorzugt im Bereich von 50 bis 99,9 % mindestens eines weiteren Polymers (wP), bezogen auf das Gesamtgewicht des Polymerfilms (P), mehr bevorzugt im Bereich von 55 bis 95 Gew.-% und insbesondere bevorzugt im Bereich von 60 bis 90 Gew.-% mindestens eines weiteren Polymers (wP), jeweils bezogen auf das Gesamtgewicht des Polymerfilms (P).

Die Summen der Gewichtsprozente der in dem Polymerfilm (P) enthaltenen Polyamidzusammensetzung (PZ) und des mindestens einen weiteren Polymers (wP) ergeben üblicherweise 100 Gew.-%.

"Mindestens ein weiteres Polymer (wP)" bedeutet im Rahmen der vorliegenden Erfindung sowohl genau ein weiteres Polymer (wP) als auch eine Mischung aus zwei oder mehreren weiteren Polymeren (wP).

Als mindestens ein weiteres Polymer (wP) eignen sich alle dem Fachmann bekannten Polymere. Es versteht sich von selbst, dass das mindestens eine weitere Polymer (wP) von dem in der Polyamidzusammensetzung (PZ) enthaltenen Polyamid 6/6.6 verschieden ist.

Bevorzugt ist das mindestens eine weitere Polymer (wP) ausgewählt aus der Gruppe bestehend aus Polyolefinen, Poly(ethylenvinylalkoholen), Poly(ethylenvinylacetaten), Polyethylenterephthalaten, Polyvinylidenchloriden, mit Maleinsäureanhydrid gegrafteten Polyolefinen, Polyestern und Ionomeren.

Besonders bevorzugt ist das mindestens eine weitere Polymer (wP) ausgewählt aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegraften Polyolefinen.

Am meisten bevorzugt ist das mindestens eine weitere Polymer (wP) ausgewählt aus der Gruppe bestehend aus Polyolefinen, mit Maleinsäureanhydrid gegrafteten Polyolefinen und Ethylvinylalkoholen.

Ist das mindestens eine weitere Polymer (wP) ausgewählt aus der Gruppe bestehend aus Polyolefinen, so ist es bevorzugt, dass zusätzlich mit Maleinsäureanhydrid gegraftete Polyolefine als mindestens ein weiteres Polymer (wP) eingesetzt werden. Dabei ist es möglich, dass als das mindestens eine weitere Polymer (wP) eine Mischung aus Polyolefinen und mit Maleinsäureanhydrid gegrafteten Polyolefinen eingesetzt wird. Ebenso ist es möglich, dass, wenn der Polymerfilm (P) ein weiter unten beschriebener Multilayerfilm ist, der Polymerfilm (P) mindestens eine erste weitere Schicht mindestens eines weiteren Polymers (wP) enthält, wobei das mindestens eine weitere Polymer (wP) der ersten weiteren Schicht ausgewählt ist aus der Gruppe bestehend aus mit Maleinsäureanhydrid gegrafteten Polyolefinen und der Polymerfilm (P) mindestens eine zweite weitere Schicht mindestens eines weiteren Polymers (wP) enthält, wobei das mindestens eine weitere Polymer (wP) der zweiten weiteren Schicht ausgewählt ist aus der Gruppe bestehend aus Polyolefinen. Der Polymerfilm (P) enthält die erste weitere Schicht dann vorzugsweise zwischen der ersten Schicht, die die Polyamidzusammensetzung (PZ) enthält, und der zweiten weiteren Schicht.

Polyolefine als solche sind dem Fachmann bekannt. Bevorzugte Polyolefine sind Polypropylen (PP), Low-Density-Polyethylen (LDPE), Linear-Low-Density-Polyethylen (LLDPE) und Very-Low-Density-Polyethylen (VLDPE).

Linear-Low-Density-Polyethylen (LLDPE) ist ein Copolymer aus Ethylen und mindestens einem C₄-C₈-α-Olefin. Linear-Low-Density-Polyethylen (LLDPE) zeichnet sich durch lange Polymerketten mit kurzen Seitenketten aus. Die Länge der Seitenketten in Linear-Low-Density-Polyethylen (LLDPE) ist üblicherweise kürzer als in Low-Density-Polyethylen (LDPE) und in Medium-Density-Polyethylen (MDPE). Der Schmelzpunkt von Linear-Low-Density-Polyethylen (LLDPE) liegt vorzugsweise im Bereich von 110 bis 130 °C, seine Dichte liegt im Bereich von 0,91 bis 0,93 g/cm³.

Very-Low-Density-Polyethylen (VLDPE) sind Copolymere aus Ethylen und mindestens einem C₄-C₈-α-Olefin. Sie weisen üblicherweise einen Schmelzpunkt im Bereich von 110 bis 130 °C und eine Dichte im Bereich von 0,86 bis < 0,91 g/cm³ auf. Der Anteil an C₄-C₈-α-Olefinen in VLDPE ist in der Regel höher als im LLDPE.

Unter "C₄-C₈-α-Olefinen" werden im Rahmen der vorliegenden Erfindung lineare und verzweigte, bevorzugt lineare, Alkylene mit 4 bis 8 Kohlenstoffatomen verstanden, die in α-Position ungesättigt sind, also in α-Stellung eine C-C-Doppelbindung aufweisen. Beispiele hierfür sind 1-Buten, 1-Penten, 1-Hexen, 1-Hepten und 1-Octen. 1-Buten, 1-Hexen und 1-Octen sind bevorzugt.

Bevorzugt als Poly(ethylenvinylacetate) sind Copolymere von Ethylen mit Vinylacetat. Beispielsweise werden im Bereich von 82 bis 99,9 Gew.-% Ethylen und im Bereich von 0,1 bis 18 Gew.-% Vinylacetat, bevorzugt im Bereich von 88 bis 99,9 Gew.-% Ethylen und im Bereich von 0,1 bis 12 Gew.-% Vinylacetat zur Herstellung eingesetzt.

Bevorzugte Poly(ethylenvinylalkohole) sind erhältlich durch vollständige oder teilweise Verseifung der vorstehend beschriebenen Poly(ethylenvinylacetate). Beispielsweise enthalten die Poly(ethylenvinylalkohole) im Bereich von 50 bis 75 mol.-% Ethylen und im Bereich von 25 bis 50 mol.-% Vinylalkohol, bezogen auf die Gesamtstoffmenge der Poly(ethylenvinylalkohole).

Der Polymerfilm (P) kann das mindestens eine weitere Polymer (wP) als Blend (Mischung) mit der Polyamidzusammensetzung (PZ) enthalten. Ebenso ist es möglich und erfindungsgemäß bevorzugt, dass der Polymerfilm (P) mindestens eine erste Schicht enthält, die die Polyamidzusammensetzung (PZ) enthält, und der Polymerfilm (P) mindestens eine weitere Schicht enthält, die das mindestens eine weitere Polymer (wP) enthält.

In dieser Ausführungsform ist es bevorzugt, dass die mindestens eine erste Schicht, die die Polyamidzusammensetzung (PZ) enthält, kein weiteres Polymer (wP) enthält.

"Mindestens eine erste Schicht" bedeutet im Rahmen der vorliegenden Erfindung sowohl genau eine erste Schicht als auch zwei oder mehrere erste Schichten.

Wie vorstehend bereits beschrieben, ergibt sich die Anzahl der ersten Schichten aus der Anzahl der ersten Extruder, die in Schritt i) des erfindungsgemäßen Verfahrens eingesetzt werden.

"Mindestens eine weitere Schicht" bedeutet im Rahmen der vorliegenden Erfindung sowohl genau eine weitere Schicht als auch zwei oder mehrere weitere Schichten.

Zwei oder mehrere weitere Schichten sind bevorzugt.

Wie nachfolgend ausgeführt, ergibt sich die Anzahl der weiteren Schichten aus der Anzahl der weiteren Extruder, die in einer Ausführungsform des erfindungsgemäßen Verfahrens eingesetzt werden.

Es ist also erfindungsgemäß bevorzugt, dass der Polymerfilm (P) mindestens eine erste Schicht enthält, die die Polyamidzusammensetzung (PZ) enthält, und der Polymerfilm (P) außerdem mindestens eine weitere Schicht enthält, wobei die mindestens eine weitere Schicht mindestens ein weiteres Polymer (wP), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen enthält.

Gegenstand der vorliegenden Erfindung ist somit auch ein Verfahren, bei dem der Polymerfilm (P) mindestens eine erste Schicht enthält, die die Polyamidzusammensetzung (PZ) enthält, und der Polymerfilm (P) mindestens eine weitere Schicht enthält, wobei die mindestens eine weitere Schicht mindestens ein weiteres Polymer (wP), das ausgewählt ist aus der Gruppe aus Polyolefinen, Poly(ethylenvinylalkoholen), Poly(ethylenvinylacetaten), Polyethylenterephthtalaten, Polyvinylidenchloriden und mit Maleinsäureanhydrid gegrafteten Polyolefinen, enthält.

Enthält der Polymerfilm (P) außer der mindestens einen ersten Schicht keine weitere Schicht, so wird der Polymerfilm (P) auch als "Monofilm" bezeichnet. Ist der Polymerfilm (P) ein Monofilm, so kann er genau eine erste Schicht und keine weitere Schicht enthalten. Ebenso ist es möglich, dass er zwei oder mehrere erste Schichten und keine weitere Schicht enthält. Enthält der Polymerfilm (P) zwei oder mehrere erste Schichten und ist er ein Monofilm, so weisen die zwei oder mehreren ersten Schichten alle dieselbe Zusammensetzung auf.

Jede der ersten Schichten enthält dann die Polyamidzusammensetzung (PZ). Bevorzugt enthält dann jede der ersten Schichten im Bereich von 0,1 bis 80 Gew.-%, besonders bevorzugt im Bereich von 0,1 bis 50 Gew.-%, bevorzugt im Bereich von 5 bis 45 Gew.-% und insbesondere bevorzugt im Bereich von 10 bis 40 Gew.-% der Polyamidzusammensetzung (PZ), jeweils bezogen auf das Gesamtgewicht des Polymerfilms (P).

Enthält der Polymerfilm (P) mindestens eine erste Schicht, die die Polyamidzusammensetzung (PZ) enthält, und mindestens eine weitere Schicht, die das mindestens eine weitere Polymer (wP) enthält, so wird der Polymerfilm (P) auch als "Multilayerfilm" bezeichnet. In dieser Ausführungsform kann die mindestens eine erste Schicht aus der Polyamidzusammensetzung (PZ) bestehen.

Beispielsweise enthält der Polymerfilm (P) dann eine bis elf erste Schichten, die die Polyamidzusammensetzung (PZ) enthalten, und eine bis dreizehn weitere Schichten, die das mindestens eine weitere Polymer (wP) enthalten. Bevorzugt enthält der Polymerfilm (P) dann eine bis fünf erste Schichten, die die Polyamidzusammensetzung (PZ) enthalten, und eine bis elf weitere Schichten, die das mindestens eine weitere Polymer (wP) enthalten. Insbesondere bevorzugt enthält der Polymerfilm (P) dann eine bis drei erste Schichten, die die Polyamidzusammensetzung (PZ) enthalten, und eine bis sieben weitere Schichten, die das mindestens eine weitere Polymer (wP) enthalten.

In einer bevorzugten Ausführungsform der vorliegenden Erfindung besteht die mindestens eine erste Schicht dann aus der Polyamidzusammensetzung (PZ). Ebenso ist es bevorzugt, dass die mindestens eine weitere Schicht aus dem mindestens einen weiteren Polymer (wP) besteht.

Der Begriff "Polymerfilm (P)" umfasst im Rahmen der vorliegenden Erfindung also sowohl Monofilme als auch Multilayerfilme, wobei Multilayerfilme bevorzugt sind.

Gegenstand der vorliegenden Erfindung ist daher auch ein Verfahren, bei dem der Polymerfilm (P) ein Multilayerfilm ist.

Gegenstand der vorliegenden Erfindung ist somit auch ein Verfahren, bei dem der Polymerfilm (P) im Bereich von 0,1 bis 80 Gew.-%, bezogen auf das Gesamtgewicht des Polymerfilms (P), der Polyamidzusammensetzung (PZ) enthält und/ oder dass der Polymerfilm (P) ein Multilayerfilm ist.

Der Polymerfilm (P) weist beispielsweise eine Dicke im Bereich von 0,1 µm bis < 1 mm auf, bevorzugt ein Dicke im Bereich von 5 bis 500 µm und insbesondere bevorzugt eine Dicke im Bereich von 20 bis 100 µm.

Gegenstand der vorliegenden Erfindung ist daher auch ein Verfahren, bei dem der Polymerfilm (P) eine Dicke im Bereich von 0,1 µm bis < 1 mm aufweist.

Ist der Polymerfilm (P) ein Monofilm und enthält er genau eine erste Schicht, so weist die erste Schicht die gleiche Dicke auf wie der Polymerfilm (P), also beispielsweise im Bereich von 0,1 µm bis < 1 mm, bevorzugt im Bereich von 5 bis 500 µm und insbesondere bevorzugt im Bereich von 20 bis 100 µm.

Ist der Polymerfilm (P) ein Monofilm und enthält er zwei oder mehrere erste Schichten, so ist die Dicke jeder ersten Schicht üblicherweise kleiner als die Dicke des Polymerfilms (P). Die Summe der Dicken der einzelnen ersten Schichten entspricht dann im Allgemeinen der Dicke des Polymerfilms (P). Beispielsweise weist die mindestens eine erste Schicht, die die Polyamidzusammensetzung (PZ) enthält, dann eine Dicke im Bereich von 0,1 bis 100 µm, bevorzugt im Bereich von 0,5 bis 50 µm und insbesondere bevorzugt im Bereich von 0,5 bis 15 µm, auf.

Ist der Polymerfilm (P) ein Multilayerfilm, so ist die Dicke der einzelnen Schichten des Polymerfilms (P), also ist die Dicke der mindestens einen ersten Schicht, die die Polyamidzusammensetzung (PZ) enthält, und die Dicke der mindestens einen weiteren Schicht, die das mindestens eine weitere Polymer (wP) enthält, üblicherweise kleiner als die Dicke des Polymerfilms (P). Die Summe der Dicken der einzelnen Schichten entspricht dann im Allgemeinen der Dicke des Polymerfilms (P).

Beispielsweise weist die mindestens eine erste Schicht, die die Polyamidzusammensetzung (PZ) enthält, dann eine Dicke im Bereich von 0,1 bis 100 µm auf, bevorzugt im Bereich von 0,5 bis 50 µm und insbesondere bevorzugt im Bereich von 0,5 bis 15 µm.

Die mindestens eine weitere Schicht, die das mindestens eine weitere Polymer (wP) enthält, weist dann beispielsweise eine Dicke im Bereich von 0,1 bis 100 µm auf, bevorzugt im Bereich von 0,5 bis 50 µm und insbesondere bevorzugt im Bereich von 0,5 bis 15 µm.

Der Polymerfilm (P) kann mindestens einen Haftvermittler enthalten. Diese Ausführungsform ist bevorzugt, wenn der Polymerfilm (P) ein Multilayerfilm ist.

"Mindestens ein Haftvermittler" bedeutet im Rahmen der vorliegenden Erfindung sowohl genau ein Haftvermittler als auch eine Mischung aus zwei oder mehreren Haftvermittlern.

Ist der Polymerfilm (P) ein Multilayerfilm, so kann der mindestens eine Haftvermittler zusammen mit der Polyamidzusammensetzung (PZ) in der mindestens einen ersten Schicht enthalten sein. Ebenso ist es möglich, dass der mindestens eine Haftvermittler zusammen mit dem mindestens einen weiteren Polymer (wP) in der mindestens eine weiteren Schicht enthalten ist. Darüber hinaus ist es möglich, dass der mindestens eine Haftvermittler als mindestens eine zusätzliche Schicht in dem Polymerfilm (P) enthalten ist. Diese Ausführungsform ist bevorzugt.

Es versteht sich von selbst, dass wenn der Polymerfilm (P) mindestens einen Haftvermittler enthält, die Summe der Gewichtsprozente der Polyamidzusammensetzung (PZ), des mindestens einen weiteren Polymers (wP) und des mindestens einen Haftvermittlers 100 Gew.-% ergibt.

Ist der mindestens eine Haftvermittler als mindestens eine zusätzliche Schicht in dem Polymerfilm (P) enthalten, so wird der mindestens eine Haftvermittler im erfindungsgemäßen Verfahren üblicherweise in einem zusätzlichen Extruder bereitgestellt und dann aus diesem ebenfalls in Schritt ii) durch die Ringdüse extrudiert.

Wenn der mindestens eine Haftvermittler als mindestens eine zusätzliche Schicht in dem Polymerfilm (P) enthalten ist, so ist diese mindestens eine zusätzliche Schicht bevorzugt zwischen der mindestens einen weiteren Schicht, die das mindestens eine weitere Polymer (wP) enthält, und der mindestens einen ersten Schicht, die die Polyamidzusammensetzung (PZ) enthält, angeordnet.

Die mindestens eine Schicht des mindestens einen Haftvermittlers weist beispielsweise eine Dicke von 0,1 bis 100 µm auf, bevorzugt im Bereich von 0,5 bis 50 µm und insbesondere bevorzugt im Bereich von 0,5 bis 15 µm.

Geeignete Haftvermittler sind dem Fachmann als solche bekannt. Bevorzugt als Haftvermittler sind Copolymere aus Ethylen mit Maleinsäureanhydrid oder ein Copolymer aus Ethylen mit Vinylacetat. Bevorzugt ist ein Copolymer aus Linear-Low-Density-Polyethylen (LLDPE) und Maleinsäureanhydrid oder ein Copolymer aus Ethylen und Vinylacetat, wobei zur Herstellung des Copolymers > 18 Gew.-% Vinylacetat und < 82 Gew.-% Ethylen eingesetzt werden. Diese Copolymere sind kommerziell erhältlich, beispielsweise unter dem Handelsnamen Bynel 4105 der Firma DuPont oder Escorene FL00119 der Firma Exxon.

Bevorzugt sind als Haftvermittler eingesetzte Copolymere aus Ethylen mit Maleinsäureanhydrid mit Maleinsäureanhydrid gegraftete Polymere oder Copolymere aus Ethylen.

Der Polymerfilm (P) kann außerdem Additive enthalten, wenn diese in dem ersten Extruder zusammen mit der Polyamidzusammensetzung (PZ) und/oder in dem weiteren Extruder zusammen mit dem mindestens einen weiteren Polymer (wP) bereitgestellt worden sind. Für die Additive gelten die zuvor beschriebenen Ausführungen und Bevorzugungen entsprechend.

Die Additive können sowohl in der mindestens einen ersten Schicht enthalten sein als auch in der mindestens einen weiteren Schicht. Sie können in nur einer dieser Schichten enthalten sein, ebenso ist es möglich, dass sie in jeder dieser Schichten enthalten sind.

Dem Fachmann ist klar, dass wenn die Additive zusammen mit der Polyamidzusammensetzung (PZ) in dem ersten Extruder bereitgestellt werden, die Additive in der ersten Schicht enthalten sind. Werden die Additive zusammen mit dem mindestens einen weiteren Polymer (wP) in dem weiteren Extruder bereitgestellt, so sind die Additive in der weiteren Schicht enthalten.

Gegenstand der vorliegenden Erfindung ist daher auch ein Polymerfilm erhältlich nach dem erfindungsgemäßen Verfahren.

Soll der Polymerfilm (P) mindestens ein weiteres Polymer (wP) enthalten, so umfasst das erfindungsgemäße Verfahren vorzugsweise zusätzlich einen Schritt i1), Bereitstellen mindestens eines weiteren Polymers (wP) in geschmolzener Form in einem weiteren Extruder, wobei der Schritt i1) vor Schritt ii) durchgeführt wird.

Gegenstand der vorliegenden Erfindung ist daher auch das erfindungsgemäße Verfahren umfassend zusätzlich Schritt
i1) Bereitstellen mindestens eines weiteren Polymers (wP) in geschmolzener Form in einem weiteren Extruder,
wobei der Schritt i1) vor Schritt ii) durchgeführt wird.

Besonders bevorzugt wird der Schritt i1) gleichzeitig mit Schritt i) durchgeführt.

Es versteht sich von selbst, dass, wenn der Schritt i1) durchgeführt wird, dann der in Schritt ii) erhaltene Schlauch zusätzlich das weitere Polymer (wP) in geschmolzener Form enthält. Ebenso enthält der in Schritt iii) erhaltene erste Schlauchfilm sowie der in Schritt iv) erhaltene erwärmte erste Schlauchfilm dann zusätzlich das mindestens eine weitere Polymer (wP).

Bevorzugt umfasst das Verfahren zur Herstellung des Polymerfilms (P) dann die folgenden Schritte:
i) Bereitstellen der Polyamidzusammensetzung (PZ) in geschmolzener Form in einem ersten Extruder,
i1) Bereitstellen mindestens eines weiteren Polymers (wP) in geschmolzener Form in einem weiteren Extruder,
ii) Extrusion der in Schritt i) bereitgestellten Polyamidzusammensetzung (PZ) in geschmolzener Form aus dem ersten Extruder durch eine Ringdüse und Extrusion des in Schritt i1) bereitgestellten mindestens einen weiteren Polymers (wP) in geschmolzener Form aus dem weiteren Extruder durch die Ringdüse unter Erhalt eines Schlauchs, der die Polyamidzusammensetzung (PZ) und das mindestens eine weitere Polymer (wP) jeweils in geschmolzener Form enthält,
iii) Abkühlen des in Schritt ii) erhaltenen Schlauchs, der die Polyamidzusammensetzung (PZ) und das mindestens eine weitere Polymer (wP) jeweils in geschmolzener Form enthält, in einem Wasserbad auf eine erste Temperatur (T₁), wobei die Polyamidzusammensetzung (PZ) und das mindestens eine weitere Polymer (wP) erstarren unter Erhalt eines ersten Schlauchfilms, der die Polyamidzusammensetzung (PZ) und das mindestens eine weitere Polymer (wP) enthält,
iv) Erwärmen des in Schritt iii) erhaltenen ersten Schlauchfilms auf eine zweite Temperatur (T₂) unter Erhalt eines erwärmten ersten Schlauchfilms, der die Polyamidzusammensetzung (PZ) und das mindestens eine weitere Polymer (wP) enthält,
v) Einblasen von Luft in den in Schritt iv) erhaltenen erwärmten ersten Schlauchfilm, wobei der erwärmte erste Schlauchfilm in seiner Breite verstreckt wird und wobei der erwärmte erste Schlauchfilm auf eine dritte Temperatur (T₃) abkühlt unter Erhalt des Polymerfilms (P), der die Polyamidzusammensetzung (PZ) und das mindestens eine weitere Polymer (wP) enthält.

Gegenstand der vorliegenden Erfindung ist daher auch ein Verfahren zur Herstellung eines Polymerfilms (P), der im Bereich von 0,1 bis 80 Gew.-%, bezogen auf das Gesamtgewicht des Polymerfilms (P), einer Polyamidzusammensetzung (PZ) enthält, und im Bereich von 20 bis 99,9 Gew.-%, bezogen auf das Gesamtgewicht des Polymerfilms (P), mindestens eines weiteren Polymers (wP) enthält, wobei die Polyamidzusammensetzung (PZ) Polyamid 6/6.6 und Polyamid-Oligomere umfasst, und wobei aus der Polyamidzusammensetzung (PZ) gemäß ISO 6427 : 2013 im Bereich von 5 bis 25 Gew.-%, bezogen auf das Gesamtgewicht der Polyamidzusammensetzung (PZ), Polyamid-Oligomere extrahiert werden können, umfassend die Schritte
i) Bereitstellen der Polyamidzusammensetzung (PZ) in geschmolzener Form in einem ersten Extruder,
i1) Bereitstellen mindestens eines weiteren Polymers (wP) in geschmolzener Form in einem weiteren Extruder,
ii) Extrusion der in Schritt i) bereitgestellten Polyamidzusammensetzung (PZ) in geschmolzener Form aus dem ersten Extruder durch eine Ringdüse und Extrusion des in Schritt i1) bereitgestellten mindestens einen weiteren Polymers (wP) in geschmolzener Form aus dem weiteren Extruder durch die Ringdüse unter Erhalt eines Schlauchs, der die Polyamidzusammensetzung (PZ) und das mindestens eine weitere Polymer (wP) jeweils in geschmolzener Form enthält,
iii) Abkühlen des in Schritt ii) erhaltenen Schlauchs, der die Polyamidzusammensetzung (PZ) und das mindestens eine weitere Polymer (wP) jeweils in geschmolzener Form enthält, in einem Wasserbad auf eine erste Temperatur (T₁), wobei die Polyamidzusammensetzung (PZ) und das mindestens eine weitere Polymer (wP) erstarren unter Erhalt eines ersten Schlauchfilms, der die Polyamidzusammensetzung (PZ) und das mindestens eine weitere Polymer (wP) enthält,
iv) Erwärmen des in Schritt iii) erhaltenen ersten Schlauchfilms auf eine zweite Temperatur (T₂) unter Erhalt eines erwärmten ersten Schlauchfilms, der die Polyamidzusammensetzung (PZ) und das mindestens eine weitere Polymer (wP) enthält,
v) Einblasen von Luft in den in Schritt iv) erhaltenen erwärmten ersten Schlauchfilm, wobei der erwärmte erste Schlauchfilm in seiner Breite verstreckt wird und wobei der erwärmte erste Schlauchfilm auf eine dritte Temperatur (T₃) abkühlt unter Erhalt des Polymerfilms (P), der die Polyamidzusammensetzung (PZ) und das mindestens eine weitere Polymer (wP) enthält.

"Ein weiterer Extruder" bedeutet im Rahmen der vorliegenden Erfindung sowohl genau ein weiterer Extruder als auch zwei oder mehrere weitere Extruder. Bevorzugt sind zwei oder mehrere weitere Extruder.

Bevorzugt werden so viele weitere Extruder eingesetzt wie weitere Schichten, die das mindestens eine weitere Polymer (wP) enthalten, im Polymerfilm (P) enthalten sein sollen. Beispielsweise werden ein bis dreizehn weitere Extruder eingesetzt, bevorzugt ein bis elf weitere Extruder und insbesondere bevorzugt ein bis sieben weitere Extruder.

Soll der Polymerfilm (P) beispielsweise genau eine weitere Schicht, die das mindestens eine weitere Polymer (wP) enthält, enthalten, so wird genau ein weiterer Extruder eingesetzt. Soll der Polymerfilm (P) genau zwei weitere Schichten enthalten, die das mindestens eine weitere Polymer (wP) enthalten, so werden genau zwei weitere Extruder eingesetzt. Soll der Polymerfilm (P) genau fünf weitere Schichten enthalten, die das mindestens eine weitere Polymer (wP) enthalten, so werden genau fünf weitere Extruder eingesetzt.

Für den weiteren Extruder gelten die zuvor für den ersten Extruder beschriebenen Ausführungen und Bevorzugungen entsprechend.

Erfindungsgemäß wird das mindestens eine weitere Polymer (wP) in Schritt i1) in geschmolzener Form bereitgestellt. "In geschmolzener Form" bedeutet, dass das mindestens eine weitere Polymer (wP) bei einer Temperatur, die oberhalb der Schmelztemperatur (T_{M(wP)}) des mindestens einen weiteren Polymers (wP) liegt, bereitgestellt wird. "In geschmolzener Form" bedeutet also, dass das mindestens eine weitere Polymer (wP) eine Temperatur aufweist, die oberhalb der Schmelztemperatur (T_{M(wP)}) des mindestens einen weiteren Polymers (wP) liegt. Liegt das mindestens eine weitere Polymer (wP) in geschmolzener Form vor, so ist das mindestens eine weitere Polymer (wP) fließfähig.

"Fließfähig" bedeutet, dass das mindestens eine weitere Polymer (wP) in dem weiteren Extruder gefördert werden kann, und dass das mindestens eine weitere Polymer (wP) aus dem weiteren Extruder extrudiert werden kann.

Beispielsweise wird das mindestens eine weitere Polymer (wP) in Schritt i1) bei einer Temperatur im Bereich von 120 bis 350 °C, bevorzugt im Bereich von 130 bis 300 °C und insbesondere bevorzugt im Bereich von 140 bis 250 °C bereitgestellt, jeweils unter der Voraussetzung, dass die Temperatur, bei der das mindestens eine weitere Polymer (wP) bereitgestellt wird, oberhalb der Schmelztemperatur (T_{M(wP)}) des mindestens einen weiteren Polymers (wP) liegt.

Das mindestens eine weitere Polymer (wP) kann nach allen dem Fachmann bekannten Methoden in dem weiteren Extruder in geschmolzener Form bereitgestellt werden. Beispielsweise kann das mindestens eine weitere Polymer (wP) in geschmolzener oder in fester Form dem weiteren Extruder zugeführt werden. Wird das mindestens eine weitere Polymer (wP) dem weiteren Extruder in fester Form zugeführt, so kann es dem weiteren Extruder beispielsweise als Granulat und/oder als Pulver zugeführt werden. Das mindestens eine weitere Polymer (wP) wird dann in dem weiteren Extruder aufgeschmolzen und so in geschmolzener Form in dem weiteren Extruder bereitgestellt.

Es ist darüber hinaus möglich, dass in Schritt i1) zusammen mit dem mindestens einen weiteren Polymer (wP) in geschmolzener Form Additive in dem weiteren Extruder bereitgestellt werden. Die Additive werden mit dem mindestens einen weiteren Polymer (wP) in geschmolzener Form in dem weiteren Extruder üblicherweise compoundiert (vermischt). Verfahren hierzu sind dem Fachmann bekannt.

Für die Additive, die gegebenenfalls zusammen mit dem weiteren Polymer (wP) in geschmolzener Form in dem weiteren Extruder bereitgestellt werden, gelten die zuvor für die Additive, die gegebenenfalls zusammen mit der Polyamidzusammensetzung (PZ) in geschmolzener Form in dem ersten Extruder bereitgestellt werden, beschriebenen Ausführungen und Bevorzugungen entsprechend.

Die Additive, die gegebenenfalls zusammen mit dem weiteren Polymer (wP) in geschmolzener Form in dem weiteren Extruder bereitgestellt werden, und die Additive, die gegebenenfalls zusammen mit der Polyamidzusammensetzung (PZ) in geschmolzener Form in dem ersten Extruder bereitgestellt werden, können gleich oder verschieden sein. Bevorzugt sind die Additive, die gegebenenfalls zusammen mit dem weiteren Polymer (wP) in geschmolzener Form in dem weiteren Extruder bereitgestellt werden, von den Additiven, die gegebenenfalls zusammen mit der Polyamidzusammensetzung (PZ) in geschmolzener Form in dem ersten Extruder bereitgestellt werden, verschieden.

Für die Schritte i), ii), iii), iv) und v) zur Herstellung des Polymerfilms (P), der die Polyamidzusammensetzung (PZ) und das mindestens eine weitere Polymer (wP) enthält, gelten die zuvor beschriebenen Ausführungen und Bevorzugungen für die Schritte i), ii), iii), iv) und v) zur Herstellung des Polymerfilms (P), der die Polyamidzusammensetzung (PZ) enthält, entsprechend.

Der in Schritt ii) erhaltene Schlauch, der die Polyamidzusammensetzung (PZ) und das mindestens eine weitere Polymer (wP) jeweils in geschmolzener Form enthält, enthält die Polyamidzusammensetzung (PZ) in mindestens einer ersten Schicht und das mindestens eine weitere Polymer (wP) in mindestens einer weiteren Schicht. Üblicherweise enthält der in Schritt ii) erhaltene Schlauch so viele erste Schichten, die die Polyamidzusammensetzung (PZ) in geschmolzener Form enthalten, wie erste Extruder in Schritt i) eingesetzt worden sind und so viele weitere Schichten, die das mindestens eine weitere Polymer (wP) in geschmolzener Form enthalten, wie weitere Extruder in Schritt i1) eingesetzt worden sind.

Die erste Temperatur (T₁) in Schritt iii) liegt, wenn Schritt i1) durchgeführt wird, bevorzugt auch unterhalb der Schmelztemperatur (T_{M(wP)}) des mindestens einen weiteren Polymers (wP).

Die zweite Temperatur (T₂) in Schritt iv) liegt, wenn Schritt i1) durchgeführt wird, bevorzugt auch oberhalb der Glasübergangstemperatur (T_{G(wP)}) des mindestens einen weiteren Polymers (wP) und insbesondere bevorzugt auch unterhalb der Schmelztemperatur (T_{M(wP)}) des mindestens einen weiteren Polymers (wP).

Die dritte Temperatur (T₃) in Schritt v) liegt, wenn Schritt i1) durchgeführt wird, bevorzugt unterhalb der Schmelztemperatur (T_{M(wP)}) des mindestens einen weiteren Polymers (wP).

Es versteht sich von selbst, dass, wenn Schritt i1) durchgeführt wird, der in Schritt v) erhaltene Polymerfilm (P) ein Multilayerfilm ist.

### Verpacken von Lebensmitteln

Der erfindungsgemäß hergestellte Polymerfilm (P) kann in einem Verfahren zum Verpacken von Lebensmitteln eingesetzt werden.

Gegenstand der vorliegenden Erfindung ist daher auch die Verwendung des erfindungsgemäßen Polymerfilms (P) zum Verpacken von Lebensmitteln.

Beispielsweise umfasst ein Verfahren zum Verpacken von Lebensmitteln die folgenden Schritte:
a) Bereitstellen eines Lebensmittels, das von mindestens einem erfindungsgemäßen Polymerfilm (P) umhüllt ist, wobei der mindestens eine Polymerfilm (P) eine Bereitstellungstemperatur (T_{B}) aufweist,
b) Erwärmen des mindestens einen Polymerfilms (P) auf eine Schrumpfungstemperatur (T_{S}), wobei der mindestens eine Polymerfilm (P) schrumpft unter Erhalt eines Lebensmittels, das von dem mindestens einen geschrumpften Polymerfilm (P) umhüllt ist.
Gegenstand der vorliegenden Erfindung ist daher auch ein Verfahren zum Verpacken von Lebensmitteln umfassend die Schritte
a) Bereitstellen eines Lebensmittels, das von mindestens einem Polymerfilm (P) gemäß Anspruch 12 umhüllt ist, wobei der mindestens eine Polymerfilm (P) eine Bereitstellungstemperatur (T_{B}) aufweist,
b) Erwärmen des mindestens einen Polymerfilms (P) auf eine Schrumpfungstemperatur (T_{S}), wodurch der mindestens eine Polymerfilm (P) schrumpft unter Erhalt eines Lebensmittels, das von dem mindestens einen geschrumpften Polymerfilm (P) umhüllt ist.

In Schritt a) wird das Lebensmittel bereitgestellt, das von mindestens einem erfindungsgemäßen Polymerfilm (P) umhüllt ist.

Für den mindestens einen Polymerfilm (P) gelten die zuvor für den Polymerfilm (P) beschriebenen Ausführungen und Bevorzugungen entsprechend.

Als Lebensmittel eignen sich alle bekannten Lebensmittel. Insbesondere geeignet sind Käseprodukte, Fleischprodukte und Wurstprodukte.

"Von dem mindestens einem Polymerfilm (P) umhüllt" bedeutet im Rahmen der vorliegenden Erfindung, dass mindestens 20 %, bevorzugt mindestens 50 %, insbesondere bevorzugt mindestens 80 % und am meisten bevorzugt 100 % der Oberfläche des Lebensmittels von dem mindestens einen Polymerfilm (P) bedeckt sind. "Bedeckt" bedeutet, dass der mindestens eine Polymerfilm (P) und die Oberfläche des Lebensmittels miteinander in direktem Kontakt stehen können. Ebenso ist es möglich, dass sich zwischen der Oberfläche des Lebensmittels und dem mindestens einen Polymerfilm (P) zumindest teilweise Luft befindet.

Der mindestens eine Polymerfilm (P) weist in Schritt a) eine Bereitstellungstemperatur (T_{B}) auf.

Die Bereitstellungstemperatur (T_{B}) liegt bevorzugt unterhalb der Glasübergangstemperatur (T_{G(PZ)}) der in dem mindestens einen Polymerfilm (P) enthaltenen Polyamidzusammensetzung (PZ).

Beispielsweise weist der Polymerfilm (P) eine Bereitstellungstemperatur (T_{B}) im Bereich von 5 bis 50 °C, bevorzugt im Bereich von 10 bis 45 °C und insbesondere bevorzugt im Bereich von 15 bis 40 °C auf.

Gegenstand der vorliegenden Erfindung ist daher auch ein Verfahren zum Verpacken von Lebensmitteln, wobei die Bereitstellungstemperatur (T_{B}) unterhalb der Glasübergangstemperatur (T_{G(PZ)}) der in dem mindestens einen Polymerfilm (P) enthaltenen Polyamidzusammensetzung (PZ) liegt.
Gegenstand der vorliegenden Erfindung ist weiterhin ein Verfahren zum Verpacken von Lebensmitteln, wobei die Bereitstellungstemperatur (T_{B}) in Schritt a) im Bereich von 5 bis 50 °C liegt.

In Schritt b) wird der mindestens eine Polymerfilm (P) auf eine Schrumpfungstemperatur (T_{S}) erwärmt. Die Schrumpfungstemperatur (T_{S}) liegt daher oberhalb der Bereitstellungstemperatur (T_{B}) des Polymerfilms (P).

Bevorzugt liegt die Schrumpfungstemperatur (T_{S}) oberhalb der Glasübergangstemperatur (T_{G(PZ)}) der in dem mindestens einen Polymerfilm (P) enthaltenen Polyamidzusammensetzung (PZ). Beispielsweise liegt die Schrumpfungstemperatur (T_{S}) im Bereich von 50 bis 150 °C, bevorzugt im Bereich von 65 bis 135 °C und insbesondere bevorzugt im Bereich von 75 bis 125 °C.

Gegenstand der vorliegenden Erfindung ist daher auch ein Verfahren zum Verpacken von Lebensmitteln, bei dem die Schrumpfungstemperatur (T_{S}) in Schritt b) im Bereich von 50 bis 150 °C liegt.

Gegenstand der vorliegenden Erfindung ist weiterhin ein Verfahren zum Verpacken von Lebensmitteln, bei dem die Schrumpfungstemperatur (T_{S}) in Schritt b) oberhalb der Glasübergangstemperatur (T_{G(PZ)}) der in dem mindestens einen Polymerfilm (P) enthaltenen Polyamidzusammensetzung (PZ) liegt.

Der mindestens eine Polymerfilm (P) kann nach allen dem Fachmann bekannten Methoden auf die Schrumpfungstemperatur (T_{S}) erwärmt werden. Beispielsweise kann er durch Wasserdampf oder Heißluft auf die Schrumpfungstemperatur (T_{S}) erwärmt werden. In Schritt b) schrumpft der mindestens eine Polymerfilm (P). Der mindestens eine Polymerfilm (P) kann bereits schrumpfen, während er auf die Schrumpfungstemperatur (T_{S}) erwärmt wird. Ebenso ist es möglich, dass der mindestens eine Polymerfilm (P) erst dann schrumpft, wenn seine Temperatur bei der Schrumpfungstemperatur (T_{S}) liegt.

Unter "Schrumpfen" wird im Rahmen der vorliegenden Erfindung verstanden, dass das Volumen des mindestens einen Polymerfilms (P) kleiner wird gegenüber dem Volumen des mindestens einen Polymerfilms (P), der die Bereitstellungstemperatur (T_{B}) aufweist. Beispielsweise wird das Volumen des mindestens einen Polymerfilms (P) um 10 bis 80 % kleiner, bevorzugt um 20 bis 70 % kleiner und insbesondere bevorzugt um 30 bis 60 % kleiner, jeweils bezogen auf das Volumen des mindestens einen Polymerfilms (P), der die Bereitstellungstemperatur (T_{B}) aufweist.

Der mindestens eine geschrumpfte Polymerfilm (P) kann das Lebensmittel in Schritt b) ganz oder teilweise umhüllen.

Beispielsweise bedeckt der mindestens eine geschrumpfte Polymerfilm (P) mindestens 20 %, bevorzugt mindestens 50 %, insbesondere bevorzugt mindestens 80 % und am meisten bevorzugt 100 % der Oberfläche des Lebensmittels. "Bedeckt" bedeutet, dass der mindestens eine geschrumpfte Polymerfilm (P) und die Oberfläche des Lebensmittels miteinander in direktem Kontakt stehen können. Ebenso ist es möglich, dass sich zwischen der Oberfläche des Lebensmittels und dem mindestens einen geschrumpften Polymerfilm (P) zumindest teilweise Luft befindet.

Der mindestens eine geschrumpfte Polymerfilm (P), der das Lebensmittel umhüllt, weist eine besonders hohe Sauerstoffbarriere auf und schützt das Lebensmittel daher besonders gut vor dem Eintritt von Sauerstoff.

Nachfolgend wird die vorliegende Erfindung anhand von Beispielen näher erläutert, ohne sie hierauf zu beschränken.

### Beispiele

Die Eigenschaften der Polymerfilme sowie der enthaltenen Komponenten wurden wie folgt bestimmt:
Die Viskositätszahl (VZ_{(PZ)}) der Polyamidzusammensetzung (PZ) wurde in einer 0,5 Gew.-%igen Lösung in 96 Gew.-%iger Schwefelsäure bei 25 °C gemäß EN ISO 307: 2007 + Amd 1: 2013 bestimmt.

Die Glasübergangstemperatur (T_{G}) und Schmelztemperatur (T_{M}) sowohl der Polyamidzusammensetzung (PZ) als auch der weiteren Polymere (wP) wurden nach ISO 11357-1: 2009, ISO 11357-2: 2013 und ISO 11357-3: 2011 bestimmt. Dazu wurden zwei Heizläufe durchgeführt und die Glasübergangtemperatur (T_{G}) und Schmelztemperatur (T_{M}) jeweils anhand des zweiten Heizlaufs ermittelt.

Die Dichte der Polyamidzusammensetzung (PZ) und der weiteren Polymere (wP) wurde nach dem Gas-Pyknometer Verfahren gemäß EN ISO 1183-3: 1999 bestimmt.

Zur Bestimmung des Anteils an Polyamid 6.6 in dem Polyamid 6/6.6 wurde die Polyamidzusammensetzung (PZ) in verdünnter Salzsäure (20 %ig) hydrolysiert. Dabei werden die von Hexamethylendiamin abgeleiteten Einheiten protoniert, wobei das Chloridion der Salzsäure das Gegenion bildet. Mittels lonentauscher wurde dieses Chloridion dann gegen ein Hydroxidion ausgetauscht unter Freisetzung von Hexamethylendiamin. Durch Titration mit 0,1 molarer Salzsäure wird dann die Hexamethylendiamin-Konzentration bestimmt, aus der sich der Anteil an Polyamid 6.6 in dem Polyamid 6/6.6 berechnen lässt.

Der Anteil an Polyamid-Oligomeren, die aus der Polyamidzusammensetzung (PZ) extrahiert werden können, wurde nach ISO 6427: 2013 in Methanol bestimmt.
Das Flächenreckverhältnis wurde als Produkt der Reckverhältnisse in Extrusionsrichtung (MD) und senkrecht dazu (TD) angegeben. Dazu wurde der erste Schlauchfilm vor Schritt v) über ein förderndes Rollensystem geführt und der Polymerfilm (P) wurde während Schritt v) über ein zweites Rollensystem mit einer höheren Rollengeschwindigkeit als das fördernde Rollensystem geführt, sodass er in seiner Länge verstreckt wurde. Das Reckverhältnis in MD wurde aus den Rollengeschwindigkeiten des fördernden Rollensystems (vor Verstrecken) und des zweiten Rollensystems (nach Verstrecken) abgelesen, das Reckverhältnis in TD wurde mit einem Messschieber am aufgeblasenen Schlauch bestimmt.

Der Heißschrumpf wurde in 90°C heißen Wasser bestimmt. Erst wurde ein 30 cm langes Probenstück des Schlauches direkt nach dem Verstrecken durch führen über ein zweites Rollensystem in Schritt v) geschnitten. Dieser Schlauch wurde an den Knickkanten der Flachlegung aufgeschnitten und eine Seite verworfen. Auf der übriggebliebenen Seite des Schlauches wurde ein Quadrat von 10 cm * 10 cm gezeichnet. Die Seitenkanten waren jeweils parallel zur Extrusionsrichtung (MD) oder senkrecht dazu (TD) gezeichnet und die einzelnen Zentimeter zwischen 0 und 10 cm waren jeweils einzeln markiert. Dieser markierte Film wurde anschließend sofort in 90 °C heißem Wasser für 5 min untergetaucht. Nach dem Wasserbad wurden die Kantenlängen des Quadrates erneut bestimmt und so ergaben sich Schrumpfwerte in MD und TD jeweils aus der Differenz der ursprünglich gezeichneten 10 cm minus der nach Schrumpf vorhandenen Länge.

Der E-Modul der Polymerfilme wurde nach ISO 527-3: 1995 bestimmt.

Die Weiterreißfestigkeit wurde nach Elmendorf, DIN ISO 6383-2: 2004 in Extrusionsrichtung (MD) und senkrecht dazu (TD) bestimmt. Die Polymerfilme wurden im Normklima für nicht tropische Länder nach DIN EN ISO 291: 2008 konditioniert.

Die flächenbezogene, spezifische Migration der in der Polyamidszuammensetzung enthaltenen Monomere wurde in Simulanz C der DIN EN 1186-5:2002 für 10 Tage bei 60°C bestimmt. Daraus wurde gemäß EU 10/2011 die füllgutbezogene, spezifische Migration berechnet.

Die Schlagfestigkeit (Dart Drop) der Monofilme wurde nach DIN ISO 7765-2: 1994 mit 5 Probenkörpern bei einer relativen Luftfeuchte von 50 % (50 % LF) bestimmt, wobei vorliegend die Schädigungsarbeit angegeben wird.

Es wurden die folgenden Komponenten eingesetzt.

### Polyamidzusammensetzungen:

P-1 Polyamid 6 der Firma BASF SE® vertrieben unter dem Markennamen Ultramid B40L und 1,03 Gew.-% extrahierbare Polyamid-Oligomere. Die Viskositätszahl (VZ) lag bei 250 ml/g, die Glasübergangstemperatur (T_{G}) bei 57 °C, die Schmelztemperatur (T_{M}) bei 220 °C und die Dichte bei 1,15 g/ml
P-2 Copolymer aus Polyamid 6 und Polyamid 6.6 (Polyamid 6/6.6) der Firma BASF SE® vertrieben unter dem Markennamen Ultramid C40L mit einem Polyamid 6.6-Anteil von 16,8 und 2,43 Gew.-% extrahierbare Polyamid-Oligomere. Die Viskositätszahl (VZ) lag bei 250 ml/g, die Glasübergangstemperatur (T_{G}) bei 53 °C, die Schmelztemperatur (T_{M}) bei 188 °C und die Dichte bei 1,143 g/ml.
P-3 Copolymer aus Polyamid 6 und Polyamid 6.6 (Polyamid 6/6.6) mit einem Polyamid 6.6-Anteil von 22,6, hergestellt nach WO 2010/066769 A2, und 18,33 Gew.-% extrahierbare Polyamid-Oligomere mit einem zahlenmittleren Molekulargewicht von 1760 g/mol. Die Viskositätszahl (VZ) lag bei 213 ml/g, die Glasübergangstemperatur (T_{G}) bei 58 °C, die Schmelztemperatur (T_{M}) bei 183 °C und die Dichte bei 1,14 g/ml.
P-4 Copolymer aus Polyamid 6 und Polyamid 6.6 (Polyamid 6/6.6) mit einem Polyamid 6.6-Anteil von 24,6, hergestellt nach WO 2010/066769 A2, und 20,7 Gew.-% extrahierbare Polyamid-Oligomere mit einem zahlenmittleren Molekulargewicht von 9020 g/mol. Die Viskositätszahl (VZ) lag bei 209 ml/g, die Glasübergangstemperatur (T_{G}) bei 57 °C, die Schmelztemperatur (T_{M}) bei 181,5 °C und die Dichte bei 1,14 g/ml,

### Weitere Polymere (wP):

wP-1 linear low density polyethylene (LLDPE) der Firma BOREALIS® vertrieben unter dem Markennamen STAMYLEX 08-026F mit einem MFR (Melt Flow Rate, Schmelze-Massefließrate) (190°C/2,16 kg) von 2,2 g/10 min nach ISO 1133 und einer Dichte von 0,910 g/ cm³ nach ISO 1183.
wP-2 ultra low density linear polyethylene (ULDPE) der Firma DOW® vertrieben unter dem Markennamen DOW ATTANE 4102G mit einem MVI (Melt Flow Index, Schmelzindex) (190°C/2,16 kg) von 1 g/10 min nach ISO 1133 und einer Dichte von 0,905 g/ cm³ nach ASTM D792.
wP-3 Antiblock Masterbatch der Firma Schulman® vertrieben unter dem Markennamen Polybatch FSU 105 E mit einer Dichte von 0,98 g/cm³ nach ISO 1183, Methode A.
wP-4 Anhydrid-modifiziertes linear low density polyethylene (LLDPE) der Firma Mitsubishi Chemical® vertrieben unter dem Markennamen MODIC M603E mit einem MFR (Melt Flow Rate, Schmelze-Massefließrate) (190°C/21,2 N) von 1,9 g/cm³ nach ISO 1133 und einer Dichte von 0,91 g/cm³ nach ISO 1183, Methode A.
wP-5 low density polyethylene (LDPE) der Firma LyondellBasell® vertrieben unter dem Markennamen Lupolen 2420 F mit einem MFR (Melt Flow Rate, Schmelze-Massefließrate) (190°C/2,16 kg) von 0,75 g/10 min.
wP-6 Anhydrid-modifiziertes linear low density polyethylene (LLDPE) der Firma DuPont® vertrieben unter dem Markennamen Bynel 4104 mit einem MFR (Melt Flow Rate, Schmelze-Massefließrate) (190°C/2,16 kg) von 1,1 g/10 min.
wP-7 ein Poly(ethylenvinylalkohol) (EVOH) der Firma Kuraray®, vertrieben unter dem Markennamen EVAL F171B mit einem MFR (Melt Flow Rate, Schmelze-Massefließrate) (210°C/2,16 kg) von 1,8 g/10 min und einem Ethylenanteil von 32 Mol-%.

Herstellung von Multilayerfilmen zur Bestimmung des Flächenreckverhältnisses und des Heißschrumpfes:

### Herstellung von 5-Schicht Primärschläuchen:

Zur Herstellung der Primärschläuche wurde eine 5-Schicht Schlauchfolienanlage der Firma PLAMEX® mit einer Düsenkopfdurchmesser von 80 mm verwendet. Es wurden 4 Extruder eingesetzt, welche einen Durchmesser von 50 mm (Extruder A, B, C, D) hatten. Extruder A war mit 67% wP-1, 30% wP-2 und 3% wP-3 beladen und lieferte die Außenschicht. Extruder B war jeweils mit 100% Polyamidzusammensetzung beladen und produzierte die Mittelschicht. Extruder C war mit 65% wP-1, 30% wP-2 und 5% wP-3 beladen und lieferte die Innenschicht. Extruder D war mit 100% wP-4 beladen und lieferte die Haftvermittlerschichten. Zwischen Extruder D und Düsenkopf war ein "Y"-Adapter, so dass Extruder D für zwei Schichten das Material aufschmolz.

Es wurde ein Primärschlauch mit 500 µm Dicke produziert. Die Schichtfolge ergab sich aus den in den Extrudern enthaltenen Zusammensetzungen, die Abfolge der Extruder war folgendermaßen: C, D, B, D, A, wobei die folgenden Schichtdicken aus den jeweiligen Extrudern erhalten wurden: Extruder C 100 µm, D jeweils 37,5 µm, B 225 µm und A 100 µm. Die jeweilige Schichtdicke wurde über den jeweiligen Extruderdurchsatz eingestellt.

Der Primärschläuche wurden aufgewickelt und für einen Tag vor Weiterverarbeitung gelagert.

### Herstellung von Schrumpffilmen:

Die Primärschläuche wurden über ein Rollensystem abgewickelt und auf 70°C +/- 5°C erhitzt. Beim Anfahrprozess wurde anschließend dynamisch Luft in den Schlauch bis zum Reckpunkt, d.h. der maximalen Reckung, eingeblasen. War der Schlauch aufgeblasen, wurde dieser in einem weiteren Rollensystem flachgelegt und in Maschinenrichtung verstreckt, da die Geschwindigkeit des zweiten Rollensystems höher war als die des ersten Rollensystems. Nach dem weiteren Rollensystem wurden Proben für die Schrumpfmessungen genommen.

Die verwendeten Komponenten sowie die Ergebnisse der Messung des Flächenreckverhältnisses und des Heißschrumpfes sind in Tabelle 1 angegeben:

**Tabelle 1:**

| | V1 | B2 | B3 |
|---|---|---|---|
| Komponente | P-2 | P-3 | P-4 |
| Flächenreckverhältnis | 11,2 | 12,6 | 14,65 |
| Schrumpf (MD) | 50% | 52% | 53% |
| Schrumpf (TD) | 50% | 52% | 55% |

Während sich der Schlauch mit der Polyamidzusammensetzung P-2 ab einem bestimmten Druck ruckartig aufblies, war das Aufblasen mit den Polyamidzusammensetzungen P-3 und P-4 wesentlich sanfter. Bei Polyamidzusammensetzung P-2 kam es beim Anfahren daher vermehrt zu Blasenexplosionen, da der Druck zu hoch war, weswegen das Anfahren deutlich mehr Zeit in Anspruch nahm.

Herstellung von Multilayerfilmen in einem Blasverfahren zur Bestimmung des E-Moduls und der Weiterreißfestigkeit

Multilayerfilme mit vier verschiedenen Materialien wurden auf einer 7-Schicht Blasfolienanlage der Firma Collin® mit einem Düsenkopfdurchmesser von 180 mm produziert. Von den 7 Extrudern hatten 6 einen Durchmesser von 30 mm und einer einen Durchmesser von 45 mm. Die erhaltenen Multilayerfilme hatten eine Dicke von 100 µm und die Schichten eine Schichtstärke von 15/14/14/14/14/15 µm. Die Extruder der Blasfolienanlage wurden entsprechend dem in Tabelle 2 angegebenen Aufbau der Multilayerfilme mit den Komponenten beaufschlagt. In Tabelle 2 sind außerdem die Eigenschaften der hergestellten Multilayerfilme angegeben.

**Tabelle 2:**

| | | V4 | **V5** | **B6** | **B7** |
|---|---|---|---|---|---|
| Aufbau | | wP-5 // wP-6 // P-1 // wP-7 // P-1 // wP-6 // wP-5 | wP-5 // wP-6 // P-2 // wP-7 // P-2 // wP-6 // wP-5 | wP-5 // wP-6 // P-3 // wP-7 // P-3 // wP-6 // wP-5 | wP-5 // wP-6 // P-4 // wP-7 // P-4 // wP-6 // wP-5 |
| E-Modul (MD) | [MPa] | 990 | 824 | 798 | 682 |
| E-Modul (TD) | [MPa] | 966 | 784 | 770 | 618 |
| Weiterreißfestigkeit | [mN] | 1932 | 3080 | 8972 | 6804 |
| (MD) | | (8N Pendel) | (8N Pendel) | (32N Pendel) | (32N Pendel) |
| Weiterreißfestigkeit | [mN] | 2276 | 6124 | 9201 | 11058 |
| (TD) | | (8N Pendel) | (8N Pendel) | (32N Pendel) | (32N Pendel) |

Herstellung von Monolayerfilmen in einem Castverfahren zur Messung der Spezifischen Migration für Lebensmittelanwendungen:
Ein Monofilm aus P-4 wurde auf einer Castfolienanlage der Firma Weber® mit einem Düsenkopfdurchmesser von 150 mm produziert. Der Extruder hatte einen Durchmesser von 30 mm. Der Durchsatz lag bei 5 kg/h. Der hergestellte Monofilm hatte eine Dicke von 50 µm und wurde direkt nach der Chillroll aufgewickelt. Die Ergebnisse der flächenbezogenen und füllgutbezogenen spezifischen Migration sind in Tabelle 3 angegeben.

**Tabelle 3:**

| | | Caprolactam | Hexamethylendiamin | Adipinsäure |
|---|---|---|---|---|
| Flächenbezogene Migration | [mg/dm²] | 2,56 | < Nachweisgrenze | 1,5 |
| Füllgutbezogene Migration | [mg/kg] | 15,34 | < Nachweisgrenze | 9,0 |

Herstellung von Monolayer-Blasfolien zur Bestimmung der Durchstoßenergie und des E-Moduls:
Monofilme wurden auf einer 7-Schicht Blasfolienanlage der Firma Collin® mit einem Düsenkopfdurchmesser von 180 mm produziert. Von den 7 Extrudern hatten 6 einen Durchmesser von 30 mm (Extruder B, C, D, E, F, G) und einer einen Durchmesser von 45 mm (Extruder A). Die Schmelze von Extruder A war innenliegend in der Blase, die Schmelze von Extruder G befand sich außen. Die Reihenfolge der Schichten, von innen nach außen, war A, B, C, D, E, F, G. Die hergestellten Monofilme hatten eine Dicke von 100 µm und die Schichten eine Schichtstärke von 15/14/14/14/14/14/15 µm in den Monofilmen. Alle Extruder wurden mit derselben Komponente beladen. Die Filme wurden vor dem Aufwickeln geschlitzt.

Die eingesetzten Komponenten und die Eigenschaften der Monofilme sind in Tabelle 4 angegeben.

**Tabelle 4:**

| | | **V8** | **V9** | **B10** | **B11** |
|---|---|---|---|---|---|
| Komponente | | P-1 | P-2 | P-3 | P-4 |
| E-Modul (MD) | [MPa] | 666 | 484 | 391 | 338 |
| E-Modul (TD) | [MPa] | 678 | 457 | 402 | 267 |
| Dart Drop | [N*mm] | 2,7 | 4,3 | 4,5 | 5,8 |

## Patentansprüche

1. Verfahren zur Herstellung eines Polymerfilms (P), der eine Polyamidzusammensetzung (PZ) enthält, wobei die Polyamidzusammensetzung (PZ) Polyamid 6/6.6 und Polyamid-Oligomere umfasst und wobei aus der Polyamidzusammensetzung (PZ) gemäß ISO 6427 : 2013 im Bereich von 5 bis 25 Gew.-%, bezogen auf das Gesamtgewicht der Polyamidzusammensetzung (PZ), Polyamid-Oligomere extrahiert werden können, umfassend die Schritte
i) Bereitstellen der Polyamidzusammensetzung (PZ) in geschmolzener Form in einem ersten Extruder,
ii) Extrusion der in Schritt i) bereitgestellten Polyamidzusammensetzung (PZ) in geschmolzener Form aus dem ersten Extruder durch eine Ringdüse unter Erhalt eines Schlauchs, der die Polyamidzusammensetzung (PZ) in geschmolzener Form enthält,
iii) Abkühlen des in Schritt ii) erhaltenen Schlauchs, der die Polyamidzusammensetzung (PZ) in geschmolzener Form enthält, in einem Wasserbad auf eine erste Temperatur (T₁), wobei die Polyamidzusammensetzung (PZ) erstarrt unter Erhalt eines ersten Schlauchfilms, der die Polyamidzusammensetzung (PZ) enthält,
iv) Erwärmen des in Schritt iii) erhaltenen ersten Schlauchfilms auf eine zweite Temperatur (T₂) unter Erhalt eines erwärmten ersten Schlauchfilms, der die Polyamidzusammensetzung (PZ) enthält,
v) Einblasen von Luft in den in Schritt iv) erhaltenen erwärmten ersten Schlauchfilm, wobei der erwärmte erste Schlauchfilm in seiner Breite verstreckt wird, und wobei der erwärmte erste Schlauchfilm auf eine dritte Temperatur (T₃) abkühlt unter Erhalt des Polymerfilms (P), der die Polyamidzusammensetzung (PZ) enthält.

2. Verfahren gemäß Anspruch 1, **dadurch gekennzeichnet, dass** der Polymerfilm (P) im Bereich von 0,1 bis 80 Gew.-%, bezogen auf das Gesamtgewicht des Polymerfilms (P), der Polyamidzusammensetzung (PZ) enthält und/ oder dass der Polymerfilm (P) ein Multilayerfilm ist.

3. Verfahren gemäß Anspruch 1 oder 2, **dadurch gekennzeichnet, dass** das Polyamid 6/6.6 im Bereich von 70 bis 78 Gew.-% Polyamid 6-Einheiten und im Bereich von 22 bis 30 Gew.-% Polyamid 6.6-Einheiten umfasst, jeweils bezogen auf das Gesamtgewicht des Polyamid 6/6.6.

4. Verfahren gemäß einem der Ansprüche 1 bis 3, **dadurch gekennzeichnet, dass** die Polyamidzusammensetzung (PZ) eine Schmelztemperatur (T_{M(PZ)}), die im Bereich von 178 bis 187 °C liegt, aufweist.

5. Verfahren gemäß einem der Ansprüche 1 bis 4, **dadurch gekennzeichnet, dass** der in Schritt ii) erhaltene Schlauch eine Dicke im Bereich von 10 µm bis 1 mm aufweist.

6. Verfahren gemäß einem der Ansprüche 1 bis 5, **dadurch gekennzeichnet, dass** die erste Temperatur (T₁) in Schritt iii) im Bereich von 5 bis 60 °C liegt.

7. Verfahren gemäß einem der Ansprüche 1 bis 6, **dadurch gekennzeichnet, dass** die Polyamidzusammensetzung (PZ) eine Glasübergangstemperatur (T_{G(PZ)}) und eine Schmelztemperatur (T_{M(PZ})) aufweist und dass die zweite Temperatur (T₂) in Schritt iv) oberhalb der Glasübergangstemperatur (T_{G(PZ)}) und unterhalb der Schmelztemperatur (T_{M(PZ)}) der Polyamidzusammensetzung (PZ) liegt.

8. Verfahren gemäß einem der Ansprüche 1 bis 7, **dadurch gekennzeichnet, dass** der Schlauch, der die Polyamidzusammensetzung (PZ) enthält, während des Abkühlens in Schritt iii) über ein erstes Rollensystem geführt wird, wobei der Schlauch in seiner Länge verstreckt wird.

9. Verfahren gemäß einem der Ansprüche 1 bis 8, **dadurch gekennzeichnet, dass** der erwärmte erste Schlauchfilm, der die Polyamidzusammensetzung (PZ) enthält, während des Einblasens von Luft in Schritt v) über ein zweites Rollensystem geführt wird, wobei der erwärmte erste Schlauchfilm in seiner Länge verstreckt wird.

10. Verfahren gemäß einem der Ansprüche 1 bis 9, **dadurch gekennzeichnet, dass** der Polymerfilm (P) eine Dicke im Bereich von 0,1 µm bis < 1 mm aufweist.

11. Verfahren gemäß einem der Ansprüche 1 bis 10, **dadurch gekennzeichnet, dass** im Anschluss an Schritt v) die folgenden Schritte durchgeführt werden:
vi) Führen des in Schritt v) erhaltenen Polymerfilms (P) über mindestens eine dritte Rolle,
vii) Erwärmen des in Schritt v) erhaltenen Polymerfilms (P) auf eine vierte Temperatur (T₄), die oberhalb der Glasübergangstemperatur (T_{G(PZ)}) der Polyamidzusammensetzung (PZ) liegt, unter Erhalt eines erwärmten Polymerfilms (P),
viii) Führen des in Schritt vii) erhaltenen erwärmten Polymerfilms (P) über mindestens eine vierte Rolle, unter Erhalt des Polymerfilms (P),
wobei der erwärmte Polymerfilm (P) zwischen Schritt vii) und Schritt viii), während Schritt viii) und/oder im Anschluss an Schritt viii) auf eine fünfte Temperatur (T₅), die unterhalb der Glasübergangstemperatur (T_{G(PZ)}) der Polyamidzusammensetzung (PZ) liegt, abgekühlt wird.

12. Polymerfilm (P) erhältlich nach einem Verfahren gemäß einem der Ansprüche 1 bis 11.

13. Verfahren zum Verpacken von Lebensmitteln, umfassend die Schritte
a) Bereitstellen eines Lebensmittels, das von mindestens einem Polymerfilm (P) gemäß Anspruch 12 umhüllt ist, wobei der mindestens eine Polymerfilm (P) eine Bereitstellungstemperatur (T_{B}) aufweist,
b) Erwärmen des mindestens einen Polymerfilms (P) auf eine Schrumpfungstemperatur (T_{S}), wodurch der mindestens eine Polymerfilm (P) schrumpft unter Erhalt eines Lebensmittels, das von dem mindestens einen geschrumpften Polymerfilm (P) umhüllt ist.

14. Verfahren gemäß Anspruch 13, **dadurch gekennzeichnet, dass** die Schrumpfungstemperatur (T_{S}) in Schritt b) im Bereich von 50 bis 150 °C liegt.

15. Verfahren gemäß Anspruch 13 oder 14, **dadurch gekennzeichnet, dass** die Schrumpfungstemperatur (T_{S}) in Schritt b) oberhalb der Glasübergangstemperatur (T_{G(PZ)}) der in dem mindestens einen Polymerfilm (P) enthaltenen Polyamidzusammensetzung (PZ) liegt.

## Claims

1. A process for producing a polymer film (P) comprising a polyamide composition (PC), where the polyamide composition (PC) comprises nylon-6/6,6 and polyamide oligomers and where it is possible to extract in the range from 5% to 25% by weight, based on the total weight of the polyamide composition (PC), of polyamide oligomers from the polyamide composition (PC) according to ISO 6427 : 2013, comprising the steps of
i) providing the polyamide composition (PC) in molten form in a first extruder,
ii) extruding the polyamide composition (PC) provided in step i) in molten form from the first extruder through an annular die to obtain a tube comprising the polyamide composition (PC) in molten form,
iii) cooling the tube comprising the polyamide composition (PC) in molten form obtained in step ii) in a water bath to a first temperature (T₁), which solidifies the polyamide composition (PC) to obtain a first tubular film comprising the polyamide composition (PC),
iv) heating the first tubular film obtained in step iii) to a second temperature (T₂) to obtain a heated first tubular film comprising the polyamide composition (PC),
v) blowing air into the heated first tubular film obtained in step iv), which stretches the heated first tubular film widthwise, and where the heated first tubular film is cooled to a third temperature (T₃) to obtain the polymer film (P) comprising the polyamide composition (PC).

2. The process according to claim 1, wherein the polymer film (P) comprises in the range from 0.1% to 80% by weight, based on the total weight of the polymer film (P), of the polyamide composition (PC) and/or the polymer film (P) is a multilayer film.

3. The process according to claim 1 or 2, wherein the nylon-6/6,6 comprises in the range from 70% to 78% by weight of nylon-6 units and in the range from 22% to 30% by weight of nylon-6,6 units, based in each case on the total weight of the nylon-6/6,6.

4. The process according to any of claims 1 to 3, wherein the polyamide composition (PC) has a melting temperature (T_{M(PC)}) in the range from 178 to 187°C.

5. The process according to any of claims 1 to 4, wherein the tube obtained in step ii) has a thickness in the range from 10 µm to 1 mm.

6. The process according to any of claims 1 to 5, wherein the first temperature (T₁) in step iii) is in the range from 5 to 60°C.

7. The process according to any of claims 1 to 6, wherein the polyamide composition (PC) has a glass transition temperature (T_{G(PC)}) and a melting temperature (T_{M(PC)}), and the second temperature (T₂) in step iv) is above the glass transition temperature T_{G(PC)}) and below the melting temperature (T_{M(PC)}) of the polyamide composition (PC).

8. The process according to any of claims 1 to 7, wherein the tube comprising the polyamide composition (PC), during the cooling in step iii), is guided over a first roll system, which stretches the tube lengthwise.

9. The process according to any of claims 1 to 8, wherein the heated first tubular film comprising the polyamide composition (PC), during the blowing-in of air in step v), is guided over a second roll system, which stretches the heated first tubular film lengthwise.

10. The process according to any of claims 1 to 9, wherein the polymer film (P) has a thickness in the range from 0.1 µm to < 1 mm.

11. The process according to any of claims 1 to 10, wherein, after step v), the following steps are conducted:
vi) guiding the polymer film (P) obtained in step v) over at least one third roll,
vii) heating the polymer film (P) obtained in step v) to a fourth temperature (T₄) which is above the glass transition temperature T_{G(PC)}) of the polyamide composition (PC) to obtain a heated polymer film (P),
viii) guiding the heated polymer film (P) obtained in step vii) over at least one fourth roll to obtain the polymer film (P),
where the heated polymer film (P), between step vii) and step viii), during step viii) and/or after step viii), is cooled to a fifth temperature (T₅) which is below the glass transition temperature (T_{G(PC)}) of the polyamide composition (PC).

12. A polymer film (P) obtainable by a process according to any of claims 1 to 11.

13. A process for packaging foodstuffs, comprising the steps of
a) providing a foodstuff encased by at least one polymer film (P) according to claim 12, where the at least one polymer film (P) has a provision temperature (T_{B}),
b) heating the at least one polymer film (P) to a shrink temperature (T_{S}), which shrinks the at least one polymer film (P) to obtain a foodstuff encased by the at least one shrunk polymer film (P).

14. The process according to claim 13, wherein the shrink temperature (T_{S}) in step b) is in the range from 50 to 150°C.

15. The process according to claim 13 or 14, wherein the shrink temperature (T_{S}) in step b) is above the glass transition temperature T_{G(PC)}) of the polyamide composition (PC) present in the at least one polymer film (P).

## Revendications

1. Procédé de fabrication d'un film polymère (P), qui contient une composition de polyamide (PZ), la composition de polyamide (PZ) comprenant du polyamide 6/6.6 et des oligomères de polyamide, et dans la plage allant de 5 à 25 % en poids, par rapport au poids total de la composition de polyamide (PZ), d'oligomères de polyamide pouvant être extraits de la composition de polyamide (PZ) selon ISO 6427 : 2013, comprenant les étapes suivantes :
i) la mise à disposition de la composition de polyamide (PZ) sous forme fondue dans une première extrudeuse,
ii) l'extrusion de la composition de polyamide (PZ) mise à disposition dans l'étape i) sous forme fondue à partir de la première extrudeuse par une buse annulaire pour obtenir un tuyau, qui contient la composition de polyamide (PZ) sous forme fondue,
iii) le refroidissement du tuyau obtenu dans l'étape ii), qui contient la composition de polyamide (PZ) sous forme fondue, dans un bain d'eau à une première température (T₁), la composition de polyamide (PZ) durcissant pour obtenir un premier film de tuyau, qui contient la composition de polyamide (PZ),
iv) le chauffage du premier film de tuyau obtenu dans l'étape iii) à une deuxième température (T₂) pour obtenir un premier film de tuyau chauffé, qui contient la composition de polyamide (PZ),
v) le soufflage d'air dans le premier film de tuyau chauffé obtenu dans l'étape iv), le premier film de tuyau chauffé étant étiré dans sa largeur, et le premier film de tuyau chauffé étant refroidi à une troisième température (T₃) pour obtenir le film polymère (P), qui contient la composition de polyamide (PZ).

2. Procédé selon la revendication 1, **caractérisé en ce que** le film polymère (P) contient dans la plage allant de 0,1 à 80 % en poids, par rapport au poids total du film polymère (P), de la composition de polyamide (PZ) et/ou **en ce que** le film polymère (P) est un film multicouche.

3. Procédé selon la revendication 1 ou 2, **caractérisé en ce que** le polyamide 6/6.6 comprend dans la plage allant de 70 à 78 % en poids d'unités polyamide 6 et dans la plage allant de 22 à 30 % en poids d'unités polyamide 6.6, à chaque fois par rapport au poids total du polyamide 6/6.6.

4. Procédé selon l'une quelconque des revendications 1 à 3, **caractérisé en ce que** la composition de polyamide (PZ) présente une température de fusion (T_{M(PZ)} qui est située dans la plage allant de 178 à 187 °C.

5. Procédé selon l'une quelconque des revendications 1 à 4, **caractérisé en ce que** le tuyau obtenu dans l'étape ii) présente une épaisseur dans la plage allant de 10 µm à 1 mm.

6. Procédé selon l'une quelconque des revendications 1 à 5, **caractérisé en ce que** la première température (T₁) dans l'étape iii) est située dans la plage allant de 5 à 60 °C.

7. Procédé selon l'une quelconque des revendications 1 à 6, **caractérisé en ce que** la composition de polyamide (PZ) présente une température de transition vitreuse (T_{G(LZ)}) et une température de fusion (T_{M(PZ)}) et **en ce que** la deuxième température (T₂) dans l'étape iv) est située au-dessus de la température de transition vitreuse (T_{G(PZ)}) et en dessous de la température de fusion (T_{M(PZ)} de la composition de polyamide (PZ) .

8. Procédé selon l'une quelconque des revendications 1 à 7, **caractérisé en ce que** le tuyau qui contient la composition de polyamide (PZ) est acheminé sur un premier système de rouleau pendant le refroidissement dans l'étape iii), le tuyau étant étiré dans sa longueur.

9. Procédé selon l'une quelconque des revendications 1 à 8, **caractérisé en ce que** le premier film de tuyau chauffé, qui contient la composition de polyamide (PZ), est acheminé sur un deuxième système de rouleau pendant le soufflage d'air dans l'étape v), le premier film de tuyau chauffé étant étiré dans sa longueur.

10. Procédé selon l'une quelconque des revendications 1 à 9, **caractérisé en ce que** le film polymère (P) présente une épaisseur dans la plage allant de 0,1 µm à < 1 mm.

11. Procédé selon l'une quelconque des revendications 1 à 10, **caractérisé en ce que** les étapes suivantes sont réalisées après l'étape v) :
vi) l'acheminement du film polymère (P) obtenu dans l'étape v) sur au moins un troisième rouleau,
vii) le chauffage du film polymère (P) obtenu dans l'étape v) à une quatrième température (T₄), qui est située au-dessus de la température de transition vitreuse (T_{G(PZ)}) de la composition de polyamide (PZ), pour obtenir un film polymère chauffé (P),
viii) l'acheminement du film polymère chauffé (P) obtenu dans l'étape vii) sur au moins un quatrième rouleau, pour obtenir le film polymère (P),
le film polymère chauffé (P) étant refroidi à une cinquième température (T₅), qui est située en dessous de la température de transition vitreuse (T_{G(PZ)}) de la composition de polyamide (PZ) entre l'étape vii) et l'étape viii), pendant l'étape viii) et/ou après l'étape viii).

12. Film polymère (P) pouvant être obtenu par un procédé selon l'une quelconque des revendications 1 à 11.

13. Procédé pour l'emballage de produits alimentaires, comprenant les étapes suivantes :
a) la mise à disposition d'un produit alimentaire, qui est entouré par au moins un film polymère (P) selon la revendication 12, ledit au moins un film polymère (P) présentant une température de mise à disposition (T_{B}),
b) le chauffage dudit au moins un film polymère (P) à une température de contraction (T_{S}), ce qui permet audit au moins un film polymère (P) de se contracter pour obtenir un produit alimentaire qui est entouré par ledit au moins un film polymère contracté (P).

14. Procédé selon la revendication 13, **caractérisé en ce que** la température de contraction (T_{S}) dans l'étape b) est située dans la plage allant de 50 à 150 °C.

15. Procédé selon la revendication 13 ou 14, **caractérisé en ce que** la température de contraction (T_{S}) dans l'étape b) est située au-dessus de la température de transition vitreuse (T_{G(PZ)}) de la composition de polyamide (PZ) contenue dans ledit au moins un film polymère (P).
